# EUROPEAN PATENT APPLICATION

(11) **EP 4 280 029 A1**
(43) Date of publication of application: **22.11.2023**
(21) Application number: 23729931.8
(22) Date of filing: 20.03.2023
(51) Int. Cl.: G06F 1/16, G06F 1/20, G06F 3/048

(54) **ELECTRONIC DEVICE COMPRISING DISPLAY REINFORCEMENT STRUCTURE**

(30) Priority: 21.03.2022 KR 20220034955; 21.07.2022 KR 20220090521
(71) Applicant: Samsung Electronics Co., Ltd., Suwon-si, Gyeonggi-do 16677 (KR)
(72) Inventor: AHN, Sungho, Suwon-si, Gyeonggi-do 16677 (KR); KIM, Kwangtai, Suwon-si, Gyeonggi-do 16677 (KR); PARK, Sanghyuk, Suwon-si, Gyeonggi-do 16677 (KR); YEOM, Donghyun, Suwon-si, Gyeonggi-do 16677 (KR); WOO, Sunggwan, Suwon-si, Gyeonggi-do 16677 (KR); LEE, Soyoung, Suwon-si, Gyeonggi-do 16677 (KR); JUNG, Jihyung, Suwon-si, Gyeonggi-do 16677 (KR); JI, Youngmin, Suwon-si, Gyeonggi-do 16677 (KR); CHOI, Sungdae, Suwon-si, Gyeonggi-do 16677 (KR)
(74) Representative: Gulde & Partner
(86) International application number: PCT/KR2023/003663
(87) International publication number: WO 2023/182748

(57) **Abstract**

An electronic device according to various embodiments disclosed herein may include: a first housing; a second housing slidably coupled to the first housing; a rollable display including a first portion visible from an exterior of the electronic device, and a second portion extending from the first portion and configured to be at least partially fed into a first space of the electronic device or fed out of the first space, the rollable display having a display area that is contracted or expanded based on sliding of the second housing; a first support plate disposed under the rollable display to support the rollable display, the first support plate including a plurality of first openings; a second support plate disposed under the first support plate and including a plurality of second openings; and a support member including multiple bars including a bendable structure, configured to move through the sliding of the second housing, and disposed under the second support plate to support the rollable display.

## Description

### [Technical Field]

Various embodiments disclosed herein relate to an electronic device including a display reinforcement structure.

### [Background Art]

With the development of deformable displays, new types of electronic devices other than existing bar-type electronic devices have emerged.

A rollable electronic device may refer to a new type of electronic device that includes a slidable housing, in which the display area of the display is expanded or contracted according to the sliding of the housing.

### [Disclosure of Invention]

### [Technical Problem]

The rollable electronic device may execute a sliding operation in a manner in which the display is fed into or out of a first space provided inside the electronic device. The display may be coupled to a support member, and the support member may slide along a guide rail.

Meanwhile, the support member may include multiple bars coupled to the display. The multiple bars may be arranged at regular intervals such that the display is bendable while the display is being fed into or out of the inside of the electronic device. Since empty spaces are disposed between the multiple bars, when an external force is applied to specific areas of the display corresponding to the empty spaces, the display may be damaged. For example, when specific areas of the display corresponding to the empty spaces between the multiple bars is repeatedly pushed or pressed with a pointed object, the exterior of the display may be pushed or a display panel may be damaged.

Various embodiments disclosed herein may present a structure capable of reinforcing empty spaces between multiple bars.

### [Solution to Problem]

An electronic device according to various embodiments disclosed herein may include: a first housing; a second housing slidably coupled to the first housing; a rollable display including a first portion visible from an exterior of the electronic device, and a second portion extending from the first portion and configured to be at least partially fed into a first space of the electronic device or fed out of the first space, the rollable display having a display area that is contracted or expanded based on sliding of the second housing; a first support plate disposed under the rollable display to support the rollable display, the first support plate including a plurality of first openings; a second support plate disposed under the first support plate and including a plurality of second openings; and a support member including multiple bars including a bendable structure, configured to move through the sliding of the second housing, and disposed under the second support plate to support the rollable display.

An electronic device according to various embodiments disclosed herein may include: a first housing; a second housing slidably coupled to the first housing; a rollable display including a first portion visible from an exterior of the electronic device, and a second portion extending from the first portion and configured to be at least partially fed into a first space of the electronic device or fed out of the first space, the rollable display having a display area that is contracted or expanded based on sliding of the second housing; a first support plate disposed under the rollable display to support the rollable display, the first support plate including a plurality of openings; a second support plate disposed under the first support plate to support the first support plate; and a support member including multiple bars including a bendable structure, configured to move through the sliding of the second housing, and disposed under the second support plate to support the rollable display.

An electronic device according to various embodiments disclosed herein may include: a first housing; a second housing slidably coupled to the first housing; a rollable display having a display area that is contracted or expanded based on sliding of the second housing; a support member including multiple bars including a bendable structure, configured to move by the sliding of the second housing, and configured to support at least a portion of the rollable display; and a processor electrically connected to the rollable display, wherein the processor may be configured to control the rollable display such that a visual user interface (UI) is displayed on an area on the rollable display corresponding to an area in which the multiple bars of the support member are located.

### [Advantageous Effects of Invention]

According to various embodiments disclosed herein, it is possible to present a structure that covers empty spaces between multiple bars. As a result, it is possible to alleviate or eliminate a phenomenon in which the exterior of the display is pressed or the display panel is damaged due to the empty spaces between the multiple bars when an external force is applied to the display.

### [Brief Description of Drawings]

In connection with the description of the drawings, the same or similar components may be denoted by the same or similar reference numerals.
FIG. 1 is a block diagram of an electronic device according to various embodiments in a network environment
FIGS. 2A and 2B are views illustrating front and rear surfaces of an electronic device according to various embodiments of the disclosure in a slide-in state.
FIGS. 3A and 3B are views illustrating front and rear surfaces of the electronic device according to various embodiments of the disclosure in a slide-out state.
FIG. 4 is an exploded perspective view of an electronic device according to various embodiments of the disclosure.
FIG. 5A is a view illustrating an arrangement structure of electronic components included in a support bracket according to various embodiments of the disclosure.
FIG. 5B is a view illustrating a portion of the configuration of an electronic device including a guide structure according to various embodiments of the disclosure.
FIG. 6A is a partial cross-sectional view of the electronic device according to various embodiments of the disclosure taken along line 5a-5a in FIG. 2A.
FIG. 6B is a cross-sectional view of the electronic device according to various embodiments of the disclosure taken along line 5b-5b in FIG. 3A.
FIG. 7 is an exploded perspective view of a display according to various embodiments of the disclosure.
FIG. 8A is a cross-sectional view taken along line A-A in FIG. 3A to show a stacked structure of a display and a support member.
FIG. 8B is a view illustrating a stacked relationship between the first support plate and the second support plate illustrated in FIG. 8A.
FIG. 8C is a view illustrating a state in which openings are provided in a second area of the first support plate in the embodiment illustrated in FIG. 8A.
FIG. 8D is a view illustrating a stacked relationship between the first support plate and the second support plate illustrated in FIG. 8C.
FIG. 9A is a cross-sectional view taken along line A-A in FIG. 3A to show a stacked structure of a display and a support member in another embodiment.
FIG. 9B is a view illustrating a stacked relationship between the first support plate and the second support plate illustrated in FIG. 9A.
FIG. 9C is a view illustrating a state in which openings are provided in a second area of the first support plate in the embodiment illustrated in FIG. 9A.
FIG. 9D is a view illustrating a stacked relationship between the first support plate and the second support plate illustrated in FIG. 9C.
FIG. 10A is a view illustrating a buffer member disposed between the first support plate and the second support plate according to various embodiments of the disclosure.
FIG. 10B is a view illustrating openings provided in the buffer member and an adhesive filled in the openings according to various embodiments of the disclosure.
FIG. 11A is a view illustrating a state in which a user interface (UI) containing visual information is displayed on one area of a display corresponding to an area in which the multiple bars of the support member are located, according to various embodiments of the disclosure.
FIG. 11B is a view illustrating a state in which a UI containing visual information and displayed on the display moves to one area of the display corresponding to an area in which the multiple bars of the support member are located, according to various embodiments of the disclosure.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

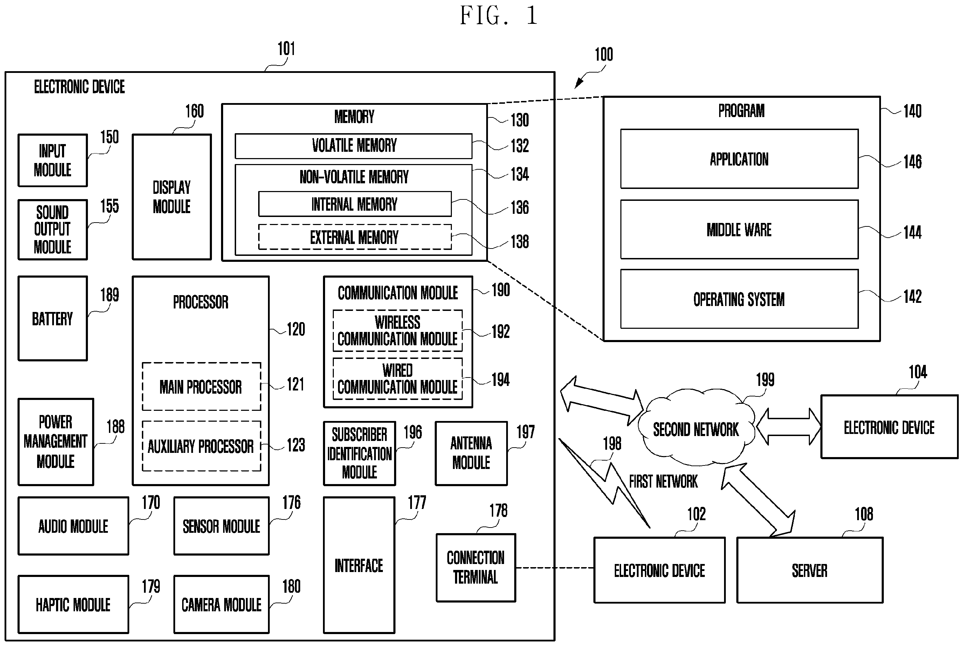

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

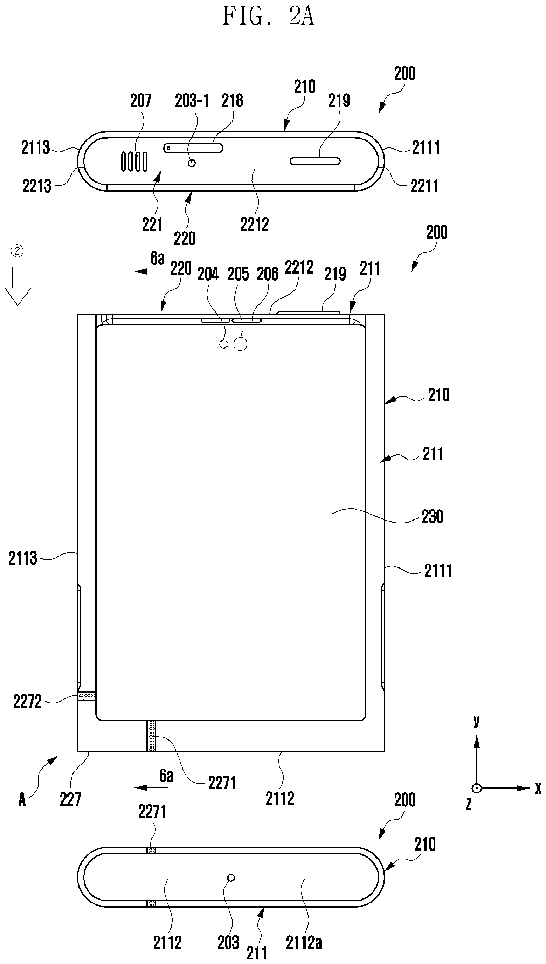

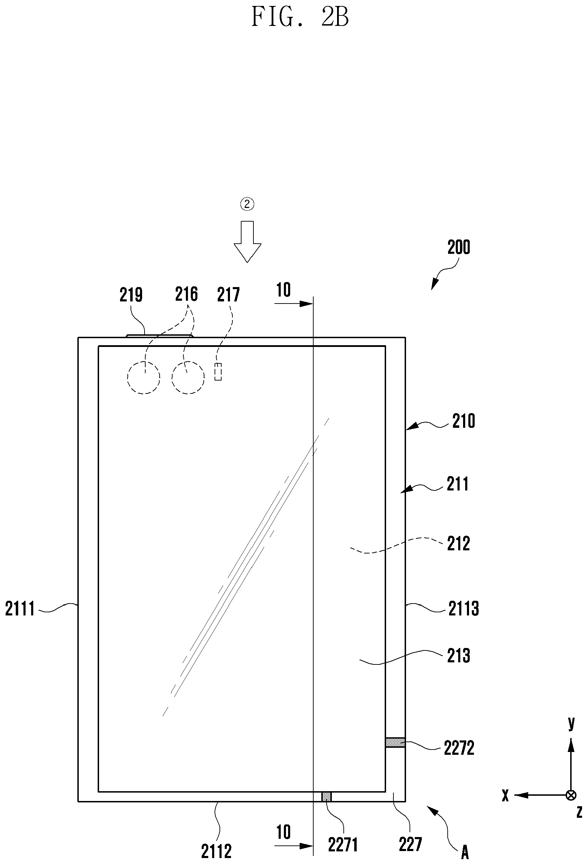

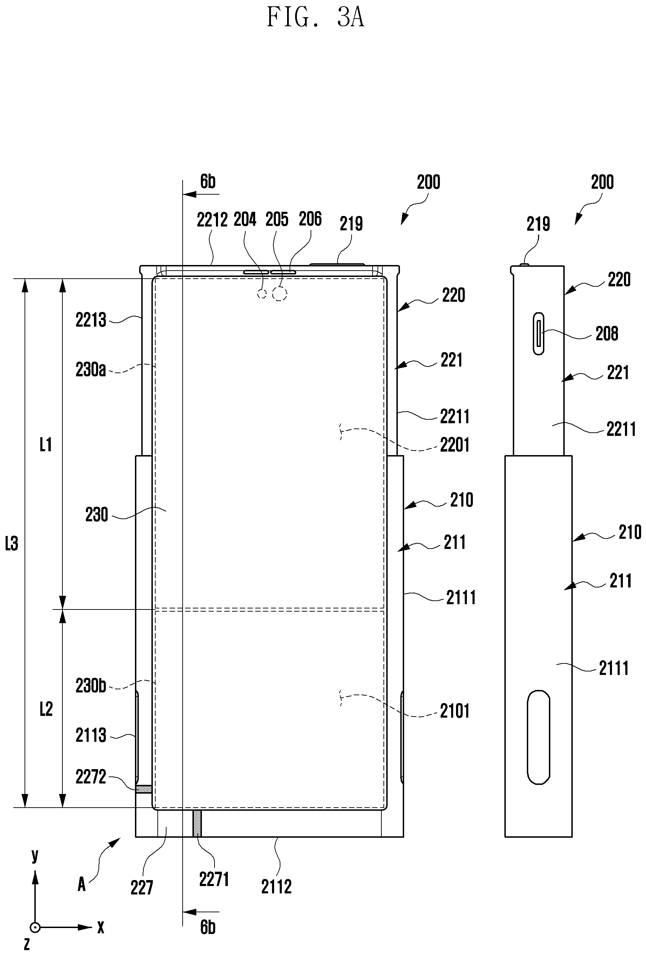

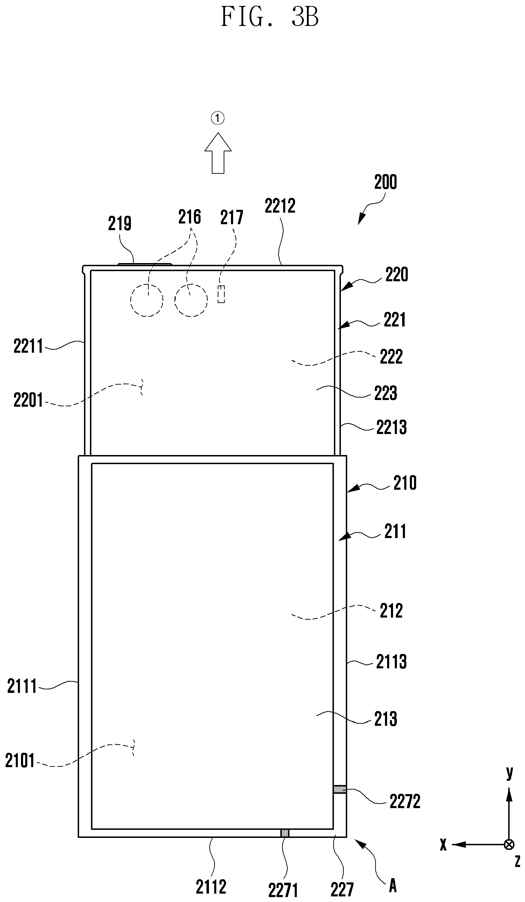

FIGS. 2A and 2B are views illustrating front and rear surfaces of an electronic device according to various embodiments of the disclosure in a slide-in state. FIGS. 3A and 3B are views illustrating front and rear surfaces of the electronic device according to various embodiments of the disclosure in a slide-out state.

The electronic device 200 of FIGS. 2A to 3B may be at least partially similar to the electronic device 101 of FIG. 1, or may further include other embodiments of the electronic device.

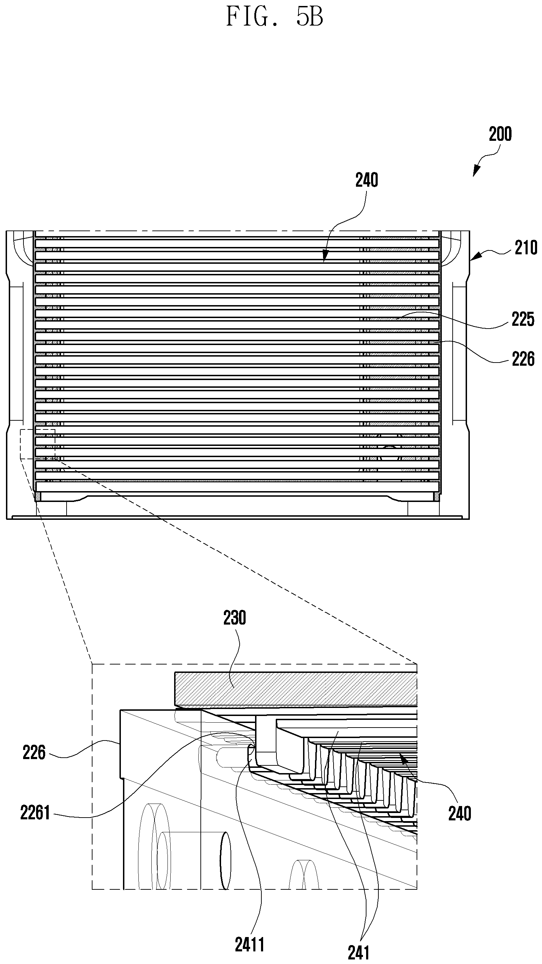

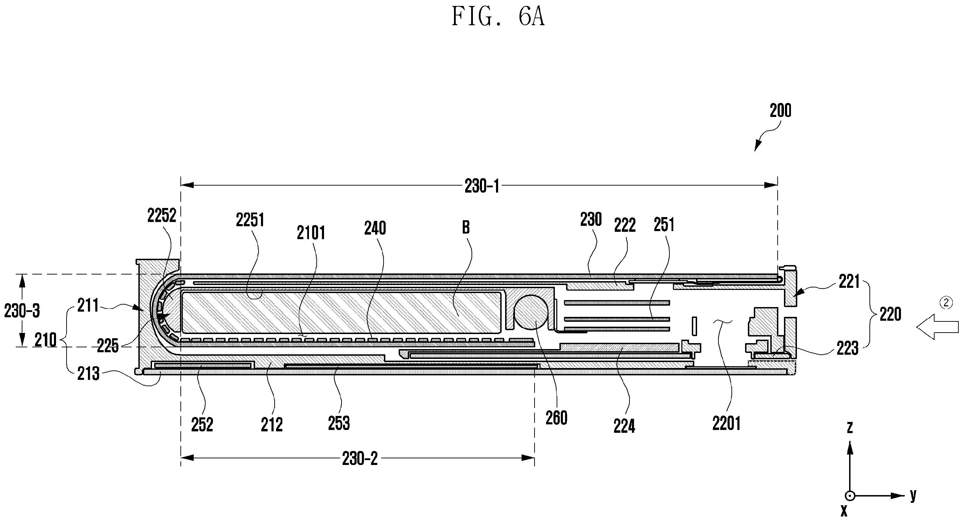

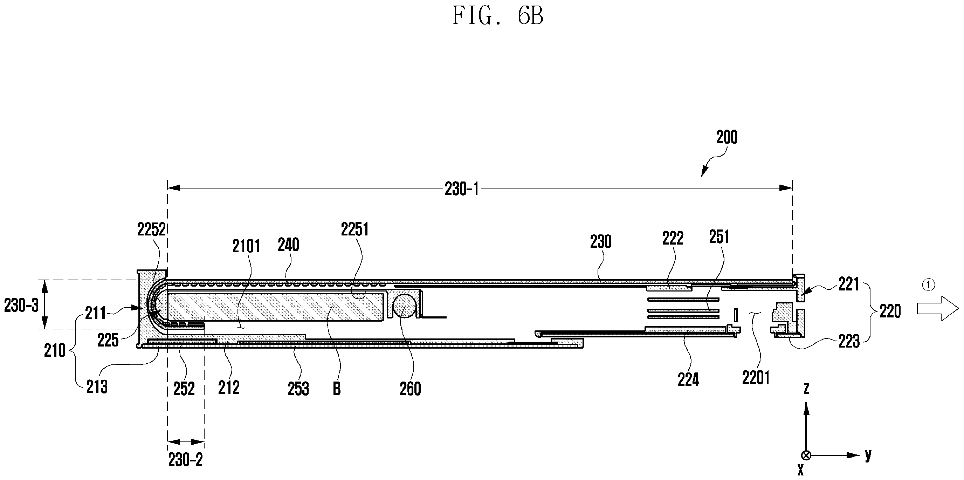

Referring to FIGS. 2A to 3B, the electronic device 200 may include: a first housing 210; a second housing 220 (e.g., a second housing structure, a fixing portion, or a base housing) coupled to be slidable in a predetermined direction (e.g., in direction ① or direction ②) (e.g., ±y-axis direction) from the first housing 210; and a rollable display 230 (e.g., a flexible display, an expandable display, or a stretchable display) disposed to be supported by at least a portion of the first and second housings 210 and 220. According to an embodiment, the electronic device 200 may be configured such that, with reference to the first housing 210 held by a user, the second housing 220 slides out in a first direction (direction (1)) or in a second direction (direction ②) opposite to the first direction (direction (1)). According to an embodiment, at least a portion of the second housing 220 including a second space 2201 may be changed into the slide-in state by being accommodated in the first space 2101 of the first housing 210. According to an embodiment, the electronic device 200 may include a support member (e.g., the support member 240 in FIG. 5B, 6A and 6B) (e.g., a bendable member, an articulated hinge module or a multi-bar assembly) configured to be at least partially coplanar with at least a portion of the second housing 220 in the slide-out state and at least partially accommodated in the first space 2101 of the first housing 210 in the slide-in state. According to an embodiment, in the slide-in state, at least a portion of the rollable display 230 may be disposed to be invisible from the outside by being accommodated into the first space 2101 of the first housing 210 in a bending manner while being supported by the support member (e.g., the support member 240 in FIG. 5B, 6A and 6B). According to an embodiment, in the slide-out state, at least a portion of the rollable display 230 may be disposed to be visible from the outside while being supported by the support member (e.g., the support member 240 in FIG. 5B, 6A and 6B), which is at least partially coplanar with the second housing 220.

According to various embodiments, the electronic device 200 may include a first housing 210 including a first side surface member 211 and a second housing 220 including a second side surface member 221. According to an embodiment, the first side member 211 may include: a first side surface 2111 having a first length along a first direction (e.g., the y-axis direction); a second side surface 2112 extending from the first side surface 2111 along a direction substantially perpendicular to the first side surface 2111 and having a second length shorter than the first length; and a third side surface 2113 extending from the second side surface 2111 to be substantially parallel to the first side surface 2111 and having the first length. According to an embodiment, at least a portion of the first side surface member 211 may be formed of a conductive member (e.g., a metal). In some embodiments, the first side surface member 211 may be configured by coupling a conductive member and a non-conductive member (e.g., a polymer). According to an embodiment, the first housing 210 may include a first extension member 212 extending from at least a portion of the first side surface member 211 to at least a portion of the first space 2101. According to an embodiment, the first extension member 212 may be configured integrally with the first side surface member 211. In some embodiments, the first extension member 212 may be configured separately from the first side surface member 211 and may be structurally coupled to the first side surface member 211.

According to various embodiments, the second side surface member 221 may include: a fourth side surface 411 at least partially corresponding to the first surface 2111 and having a third length; a fifth side surface 2212 extending from the fourth side surface 2211 in a direction substantially parallel to the second side surface 2112 and having a fourth length longer than the third length; and a sixth side surface 2213 extending from the fifth side surface 2212 to correspond to the third side surface 2113 and having the third length. According to an embodiment, at least a portion of the second side surface member 221 may be formed of a conductive member (e.g., a metal). In some embodiments, the second side surface member 221 may be configured by coupling a conductive member and a non-conductive member (e.g., a polymer). According to an embodiment, at least a portion of the second side surface member 221 may include a second extension member 222 extending to at least a portion of the second space 2201 of the second housing 220. According to an embodiment, the second extension member 222 may be configured integrally with the second side surface member 221. In some embodiments, the second extension member 222 may be configured separately from the second side surface member 221 and may be structurally coupled to the second side surface member 221.

According to various embodiments, the first side surface 2111 and the fourth side surface 2211 may be slidably coupled to each other. According to an embodiment, the third side surface 2113 and the sixth side surface 2213 may be slidably coupled to each other. According to an embodiment, in the slide-in state, the fourth side surface 2211 may be disposed to be substantially invisible from the outside by overlapping the first side surface 2111. According to an embodiment, in the slide-in state, the sixth side surface 2213 may be disposed to be substantially invisible from the outside by overlapping the third side surface 2113. In some embodiments, at least a portion of the fourth and sixth side surfaces 2211 and 2213 may be disposed to be at least partially visible from the outside in the slide-in state. According to an embodiment, in the slide-in state, the second extension member 222 may be disposed to be substantially invisibly from the outside by overlapping the first extension member 212.

According to various embodiments, the first housing 210 may include a first rear surface cover 213 coupled to at least a portion of the first side surface member 211. According to an embodiment, the first rear surface cover 213 may be disposed in a manner of being coupled to at least a portion of the first extension member 212. In some embodiments, the first rear surface cover 213 may be configured integrally with the first side surface member 211. According to an embodiment, the first rear surface cover 213 may be made of a polymer, coated or tinted glass, ceramic, a metal (e.g., aluminum, stainless steel (STS), or magnesium), or a combination of at least two of these materials. In some embodiments, the first rear surface cover 213 may extend to at least a portion of the first side surface member 211. In some embodiments, at least a portion of the first extension member 212 may be replaced with the first rear surface cover 213.

According to various embodiments, the second housing 220 may include a second rear surface cover 223 coupled to at least a portion of the second side surface member 221. According to an embodiment, the second rear surface cover 223 may be disposed in a manner of being coupled to at least a portion of the second extension member 222. In some embodiments, the second rear surface cover 223 may be configured integrally with the second side surface member 221. According to an embodiment, the second rear surface cover 223 may be made of a polymer, coated or tinted glass, ceramic, a metal (e.g., aluminum, stainless steel (STS), or magnesium), or a combination of at least two of these materials. In some embodiments, the second rear surface cover 223 may extend to at least a portion of the second side surface member 221. In some embodiments, at least a portion of the second extension member 222 may be replaced with the second rear surface cover 223.

According to various embodiments, the electronic device 200 may include a rollable display 230 disposed to be supported by at least a portion of the first housing 210 and at least a portion of the second housing 220. According to an embodiment, the rollable display 230 may include: a first portion 230a (e.g., a flat portion) that is always visible from the outside; and a second portion 230b (e.g., a bendable portion) extending from the first portion 230a and at least partially accommodated in the first space 2101 of the first housing 210 to be invisible from the outside in the slide-in state. According to an embodiment, the first portion 230a may be disposed to be supported by the second housing 220, and the second portion 230b may be disposed to be at least partially supported by the support member (e.g., the support member 240 in FIG. 5B, 6A and 6B). According to an embodiment, in the state in which the second housing 220 is slid out along a first direction (direction (1)), the second portion 230b of the rollable display 230 may extend from the first portion 230a while being supported by the support member (e.g., the support member 240 in FIG. 5B, 6A and 6B ), and may be disposed to be substantially coplanar with the first portion 230a and to be visible from the outside. According to an embodiment, in the state in which the second housing 220 is slid in along a second direction (direction ②), the second portion 230b of the rollable display 230 may be disposed to be accommodated into the first space 2201 of the first housing 210 in a bending manner and to be invisible from the outside. Accordingly, in the electronic device 200, the display area of the rollable display 230 may be variable since the second housing 220 is moved in a sliding manner from the first housing 210 in a predetermined direction (e.g., ±y-axis direction).

According to various embodiments, the rollable display 230 may be variable in length in the first direction (direction ①) according to the sliding of the second housing 220 that is moved with reference to the first housing 210. For example, in the slide-in state, the rollable display 230 may have a first display area corresponding to a first length L1 (e.g., an area corresponding to the first portion 230a). According to an embodiment, in the slide-out state, according to the sliding of the second housing 220 further moved by a second length L2 with reference to the first housing 210, the rollable display 230 may be expanded to have a third display area (e.g., an area including the first portion 230a and the second portion 230b), which corresponds to a third length L3 longer than the first length L1 and is larger than the first display area.

According to various embodiments, the electronic device 200 may include at least one of an input device (e.g., a microphone 203-1) disposed in the second space 2201 of the second housing 220, a sound output device (e.g., a phone call receiver 206 and/or a speaker 207), sensor modules 204 and 217, a camera module (e.g., the first camera module 205 or the second camera module 216), a connector port 208, a key input device 219, or an indicator (not illustrated). According to an embodiment, the electronic device 200 may include another input device (e.g., the microphone 203) disposed in the first housing 210. In another embodiment, the electronic device 200 may be configured such that at least one of the above-mentioned components is omitted or other components are additionally included. In another embodiment, at least one of the above-described components may be disposed in the first space 2101 of the first housing 210.

According to various embodiments, the input device may include a microphone 203-1. In some embodiments, the input device (e.g., the microphone 203-1) may include a plurality of microphones arranged to detect the direction of sound. The sound output device may include, for example, a phone call receiver 206 and a speaker 207. According to an embodiment, regardless of the slide-in/slid-out state, the speaker 207 may correspond to the outside through at least one speaker hole provided in the second housing 220 at a position (e.g., the fifth side surface 2212) always exposed to the outside. According to an embodiment, in the slide-out state, the connector port 208 may correspond to the outside through a connector port hole provided in the second housing 220. In some embodiments, in the slide-in state, the connector port 208 may correspond to the outside through an opening provided in the first housing 210 to correspond to the connector port hole. In some embodiments, the phone call receiver 206 may include a speaker that is operated without a separate speaker hole (e.g., a piezo speaker).

According to various embodiments, the sensor modules 204 and 217 may generate electrical signals or data values corresponding to the internal operating state of the electronic device 200 or an external environmental state. The sensor modules 204 and 217 may include, for example, a first sensor module 204 (e.g., a proximity sensor or an illuminance sensor) disposed on the front surface of the electronic device 200 and/or a second sensor module 217 (e.g., a heart rate monitoring (HRM) sensor) disposed on the rear surface of the electronic device 200. According to an embodiment, the first sensor module 204 may be disposed under the rollable display 230 in the front surface of the electronic device 200. According to an embodiment, the first sensor module 204 and/or the second sensor module 217 may include at least one of a proximity sensor, an illuminance sensor, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to various embodiments, the camera module may include a first camera module 205 disposed on the front surface of the electronic device 200 and a second camera module 216 disposed on the rear surface of the electronic device 200. According to an embodiment, the electronic device 200 may include a flash (not illustrated) located near the second camera module 216. According to an embodiment, the camera modules 205 and 216 may include one or more lenses, an image sensor, and/or an image signal processor. According to an embodiment, the first camera module 205 may be disposed under the rollable display 230 and configured to photograph a subject through a portion of an active area (e.g., a display area) of the rollable display 230.

According to various embodiments, the first camera module 205 among the camera modules and some sensor modules 204 among the sensor modules 204 and 217 may be disposed to detect the external environment through the rollable display 230. For example, the first camera module 205 or some sensor modules 204 may be disposed in the second space 2201 of the second housing 220 to be in contact with the external environment through a transmission area or a perforated opening provided in the rollable display 230. According to an embodiment, the area of the rollable display 230, which faces the first camera module 205, may be configured as a transmission area having a predetermined transmittance as a portion of display area for displaying contents. According to an embodiment, the transmission area may have a transmittance in the range of about 5% to about 20%. The transmission area may include an area overlapping the effective area (e.g., the view angle area) of the first camera module 205 through which light imaged by an image sensor to generate an image passes. For example, the transmission area of the rollable display 230 may include an area having a lower pixel arrangement density and/or wiring density than the surrounding area. For example, the transmission area may replace the above-mentioned openings. For example, some camera modules 205 may include an under-display camera (UDC). In some embodiments, some sensor modules 204 may be disposed to perform the functions thereof in the internal space of the electronic device 200 without being visually exposed through the rollable display 230.

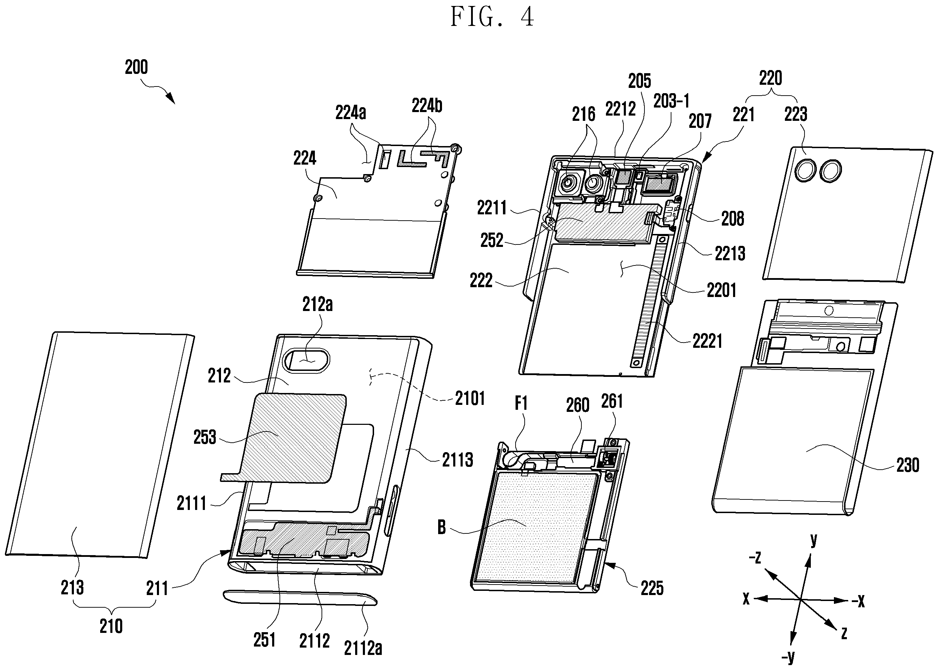

According to various embodiments, the electronic device 200 may include at least one antenna element (e.g., the antenna element 214b in FIG. 4) electrically connected to a wireless communication circuit (e.g., the wireless communication module 192 in FIG. 1) disposed in the second housing 220. According to an embodiment, the electronic device 200 may include a bezel antenna A disposed through the conductive first side surface member 211 of the first housing 220. For example, the bezel antenna A may include a conductive portion 227 disposed in at least a portion of the second and third side surfaces 2112 and 2113 of the first side surface member 211 and electrically split by at least one splitting portions 2271 and 2272 made of a non-conductive material (e.g., a polymer). According to an embodiment, the wireless communication circuit (e.g., the wireless communication module 192 in FIG. 1) may be configured to transmit or receive a wireless signal in at least one predetermined frequency band (e.g., about 600 MHz to 9000 MHz) (e.g., a legacy band or NR band) via the conductive portion 227. According to an embodiment, the electronic device 200 may include a side surface cover 2112a disposed on the second side surface 2112 to cover at least a portion of the at least one splitting portion 2271. In some embodiments, the bezel antenna A may be disposed on at least one of the first side surface 2111, the second side surface 2212, and the third side surface 2113. In some embodiments, the bezel antenna A may be disposed on at least one of the fourth side surface 2211, the fifth side surface 2212, and the sixth side surface 2213 of the second housing 220. In some embodiments, the electronic device 200 may further include at least one antenna module (e.g., a 5G antenna module or an antenna structure) disposed in the internal space (e.g., the second space 2201 or the first space 2101) and configured to transmit or receive a wireless signal of a frequency band in the range of about 3 GHz to 100 GHz via another wireless communication circuit (e.g., the wireless communication module 192 in FIG. 1). In some embodiments, the wireless communication circuit may be disposed in the first housing 210.

According to various embodiments, the slide-in/slide-out operation of the electronic device 200 may be automatically performed. For example, the slide-in/slide-out operation of the electronic device 200 may be executed via gear coupling between a driving motor (e.g., the driving motor 260 in FIG. 4) including a pinion gear (e.g., the pinion gear 261 in FIG. 4) disposed in the first space 2101 of the first housing 220 and a rack gear (e.g., the rack gear 2221 in FIG. 4) disposed in the second space 2201 of the second housing 210 and gear-coupled with the pinion gear 261. For example, when detecting a triggering operation of switching from the slide-in state to the slide-out state or from the slide-out state to the slide-in state, the processor (e.g., the processor 120 in FIG. 1) of the electronic device 200 may operate the driving motor (e.g., the driving motor 260 in FIG. 4) disposed inside the electronic device 200. According to an embodiment, the triggering operation may include selecting (e.g., touching) an object displayed on the rollable display 230 or operating a physical button (e.g., a key button) included in the electronic device 200.

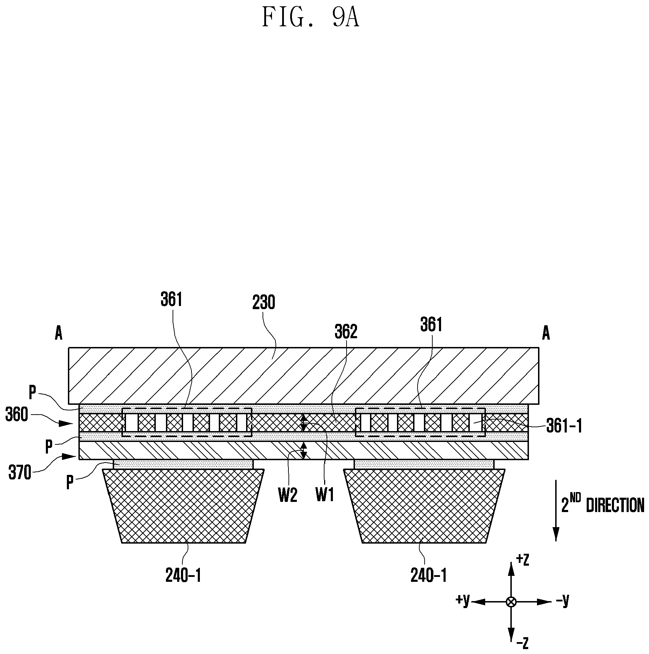

An electronic device 200 according to an exemplary embodiment of the disclosure may include a driving motor (e.g., the driving motor 260 in FIG. 4) disposed in the first space 2101 of the first housing 210 at the end closest to the second space 2101 of the second housing 220 in the slide-out direction (direction (1)) and include an electrical connection structure electrically connected to a second printed circuit board (e.g., the second printed circuit board 252 in FIG. 4) disposed in the second space 2201 via a flexible printed circuit board (e.g., the flexible printed circuit board F1 in FIG. 9A), so that electrical connection structures between the second printed circuit board 252 and the driving motor 260, which are disposed in different housings 210 and 220, respectively, may be minimized to help improve operational reliability. According to an embodiment, the electronic device 200 may include a battery (e.g., the battery B in FIG. 4) disposed in the first space 2101 of the first housing 210 to support at least a portion of the rollable display 230 in the slide-out state, which may help improve the operational reliability of the electronic device 200. According to an embodiment, the electronic device 200 includes the driving motor 260 and the battery B disposed in the first space 2101 of the first housing 210, which may induce a relatively light weight of the second housing 220 to minimize driving resistance. Thus, it is possible to induce sliding of the second housing 220 with minimal power consumption.

Hereinafter, a detailed description will be made below.

FIG. 4 is an exploded perspective view of an electronic device according to various embodiments of the disclosure.

In describing the electronic device 200 of FIG. 4, the same reference numerals are assigned to components that are substantially the same as those of the electronic device 200 of FIGS. 2A to 3B, and a detailed description thereof may be omitted.

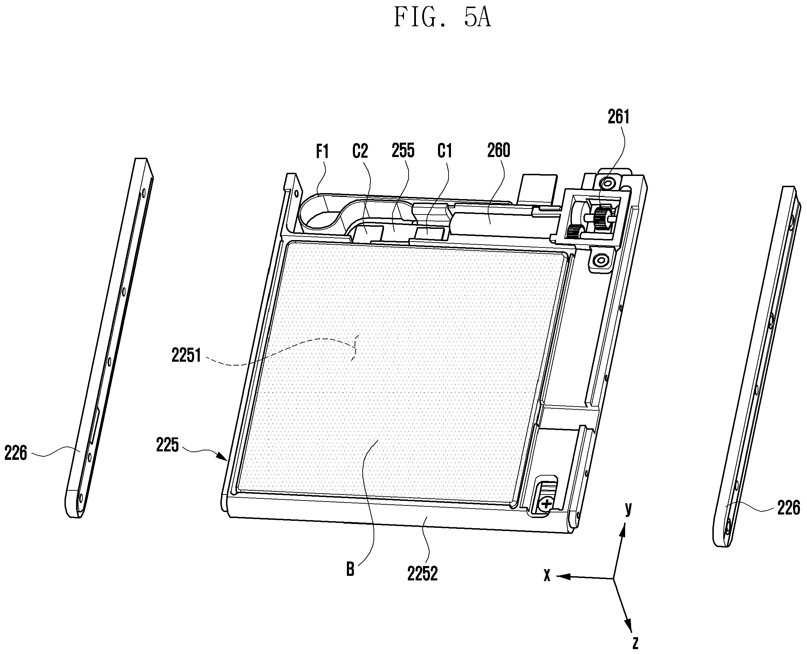

Referring to FIG. 4, the electronic device 200 may include: a first housing 210 including a first space 2101; a second housing 220 coupled to be slidable from the first housing 210 and including a second space (e.g., the second space 2201 in FIG. 3A); a support member (e.g., the support member 240 in FIG. 5B, 6A and 6B) pivotably disposed in a manner of being at least partially bent in the second space 2201; a rollable display 230 disposed to be supported by at least a portion of the support member 240 and the second housing 220; and a driving module configured to drive the second housing 220 in a slide-in direction (e.g., the -y-axis direction) and/or a slide-out direction (e.g., the y-axis direction) relative to the first housing 210. According to an embodiment, the first housing 210 may include: a first side surface member 211; and a first rear surface cover 213 coupled with at least a portion of the first side surface member 211 (e.g., at least a portion of the first extension member 212). According to an embodiment, the second housing 220 may include: a second side surface member 221; and a second rear surface cover 223 coupled with at least a portion of the second side surface member 221 (e.g., at least a portion of the second extension member 221). According to an embodiment, the driving module may include: a driving motor 260 disposed in the first space 2101 and including a pinion gear (e.g., the pinion gear 261 in FIG. 5A); and a rack gear 2221 disposed in the second space 2201 to be gear-coupled with the pinion gear 261. According to an embodiment, the driving module may further include a reduction module including a plurality of gear assemblies arranged to reduce a rotation speed and increase a driving force by being coupled to the driving motor 260. According to an embodiment, the driving motor 260 may be disposed to be supported via at least a portion of a support bracket 225 disposed in the first space 2101 of the first housing 210. According to an embodiment, the driving motor 260 may be fixed to an end (e.g., an edge) of the support bracket 225 in the slide-out direction (e.g., the y-axis direction) in the first space 2101.

According to various embodiments, the electronic device 200 may include at least one electronic component disposed in the second space 2201. According to an embodiment, the at least one electronic component may include: a first printed circuit board 251 disposed in the first housing 210; and a second printed circuit board 252 disposed in the second housing. According to an embodiment, the at least one electronic component may include a camera module 216, a speaker 207, a connector port 208, and a microphone 203-1 arranged around the second printed circuit board 252 in the second space 2201. According to an embodiment, since the at least one electronic component is disposed around the second printed circuit board 252 in the second space 2201 of the second housing 220, efficient electrical connection may be possible.

According to various embodiments, the electronic device 200 may include a rear bracket 224 disposed to cover at least some of a plurality of electronic components disposed between the second extension member 222 and the second rear surface cover 223 in the second housing 220. According to an embodiment, the rear bracket 224 may be structurally coupled to at least a portion of the second extension member 222. In some embodiments, the rear bracket 224 may be omitted. According to an embodiment, the rear bracket 224 may be disposed to cover at least one electronic component and to support the second rear surface cover 223. According to an embodiment, the rear bracket 224 may include a notch area 224a or an opening 224a (e.g., a through hole) provided in an area corresponding to the camera module 216 and/or the sensor module (e.g., the sensor module 217 in FIG. 3B). According to an embodiment, the rear bracket 224 may include at least one antenna element 224b. According to an embodiment, when the rear bracket 224 is a dielectric injection-molded product (e.g., an antenna carrier), the at least one antenna element 224b may be disposed on the outer surface of the rear bracket 224. According to an embodiment, the at least one antenna element 224b may include a laser direct structuring (LDS) antenna pattern provided on the outer surface of the rear bracket 224. In some embodiments, the at least one antenna element 224b may include a conductive plate attached to the outer surface of the rear bracket 224 or a conductive paint or conductive pattern provided on the outer surface. In some embodiments, the at least one antenna element 224b may be disposed in a built-in manner when the rear bracket 224 is injection-molded. According to an embodiment, the at least one antenna element 224b may be configured to transmit or receive a wireless signal in a predetermined frequency band (e.g., a legacy band) by being electrically connected to a wireless communication circuit (e.g., the wireless communication module 192 in FIG. 1) disposed on the first printed circuit board 251. According to an embodiment, the camera module 216 and/or the sensor module 217 may be arranged to detect an external environment through the notch area 224a or the opening 224a. According to an embodiment, the second rear surface cover 223 may be processed to be transparent in an area corresponding to at least the camera module 216 and/or the sensor module 217. In some embodiments, the camera module 216 and/or the sensor module 217 may be configured to operate only when the electronic device 200 is in the slide-out state.

According to various embodiments, the electronic device 200 may include a support bracket 225 disposed in the first space 2101 of the first housing 210. According to an embodiment, the support bracket 225 may include a support portion 2252 disposed at one end and having a curved outer surface to support the rear surface of the support member 240, which is bent during the sliding operation. According to an embodiment, the support bracket 225 may include a support structure configured to support and fix the driving motor 260. According to an embodiment, the driving motor 260 may be disposed at the end (e.g., an edge) of the support bracket 225 in the slide-out direction (e.g., the y-axis direction). For example, when the assembly of the electronic device 200 is completed, the driving motor 260 is disposed at a position closest to the second printed circuit board 252 among the electronic components disposed in the first housing 210. As a result, it is possible to minimize the size and/or the length of the flexible printed circuit board F1 electrically interconnecting the second printed circuit board 252 and the driving motor 260. According to an embodiment, the electronic device 200 may include a pair of guide rails (e.g., the guide rails 226 in FIG. 6A) disposed on opposite side surfaces of the support bracket 225 to guide the opposite ends of the support member 240 in the sliding direction.

According to various embodiments, the first housing 210 may include an opening 212a (e.g., a through hole) disposed in an area corresponding to the camera module 216 and/or the sensor module 217 disposed in the second housing 220 when the electronic device 200 is in the slide-in state in the first extension member 212. According to an embodiment, when the electronic device 200 is in the slide-in state, the camera module 216 and/or the sensor module 217 may detect an external environment through the opening 212a provided in the first housing 210. In this case, an area of the first rear surface cover 213 corresponding to at least the camera module 216 and/or the sensor module 217 may be processed to be transparent.

According to various embodiments, the electronic device 200 may include a first printed circuit board 251 and an antenna member 253 disposed between the first extension member 212 and the first rear surface cover 213 in the first housing 210. According to an embodiment, the first printed circuit board 251 and the antenna member 253 may be disposed on at least a portion of the first extension member 212. According to an embodiment, the first printed circuit board 251 and the antenna member 253 may be electrically connected to the second printed circuit board 252 via at least one flexible printed circuit board (FPCB) (or flexible RF cable (FRC)). According to an embodiment, the antenna member 253 may include a multi-function coil or multi-function core (MFC) antenna configured to execute a wireless charging function, a neat field communication (NFC) function, and/or an electronic payment function. In some embodiments, the antenna member 253 may be electrically connected to the first printed circuit board 251, thereby being electrically connected to the second printed circuit board 252 via the first printed circuit board 251. In some embodiments, the first printed circuit board 251 and/or the antenna member 253 may be electrically connected to the second printed circuit board 252 via at least a portion of the flexible printed circuit board F1 connecting the driving motor 260 and the second printed circuit board 252 to each other.

FIG. 5A is a view illustrating an arrangement structure of electronic components included in the support bracket according to various embodiments of the disclosure. FIG. 5B is a view illustrating a portion of the configuration of an electronic device including a guide structure according to various embodiments of the disclosure.

Referring to FIG. 5A, the support bracket 225 may include: a battery seat 2251 configured to accommodate a battery B; and a driving motor 260 disposed around the battery seat 2251 and including a pinion gear 261. In some embodiments, the battery seat 2251 may be disposed to be supported via a partition wall that at least partially extends from the outer surface of the support bracket 225. In some embodiments, the battery B may be fixed to at least a portion of the support bracket 225 through an adhesion process such as bonding or taping, without a separate partition wall.

According to various embodiments, the electronic device 200 may include, in the support bracket 225, a third printed circuit board 255 (e.g., a finger PCB, a sub-substrate or FPCB) disposed near the driving motor 260. According to an embodiment, the third printed circuit board 255 may be disposed at a position to be electrically connected to a first connection portion C1 slid out from the driving motor 260 and a second connection portion C2 slid out from the battery B. For example, one end of the driving motor 260 may be electrically connected to the second printed circuit board 252 disposed in the second space 2201 of the second housing 220, and the other end of the driving motor 260 may be electrically connected to the second printed circuit board 252 via the flexible printed circuit board F1 electrically connected to the third printed circuit board 255. According to an embodiment, the flexible printed circuit board F 1 may be made of an elastic material or in shape that is expanded in the slide-out state and is restored to an original position in the slide-in state. According to an embodiment, the flexible printed circuit board F1 may include a flexible printed circuit board (FPCB) or a flexible RF cable (FRC).

Referring to FIG. 5B, the electronic device 200 may include a support member 240 configured to support the rollable display 230 and a pair of guide rails 226 configured to guide opposite ends of the support member 240. According to an embodiment, the pair of guide rails 226 may be respectively fixed to opposite ends of the support bracket 225 in the first space 2101 of the first housing 210. According to an embodiment, the support member 240 may include a plurality of multi-bars 241 rotatably coupled to each other and guide protrusions 2411 protruding from opposite ends of each of the multi-bars 241. According to an embodiment, the guide rails 226 may be fixed to opposite side surfaces of the support bracket 225 disposed in the first space 2101 of the first housing 210. According to an embodiment, the guide rails 226 may each include a guide slit 2261 provided at a position corresponding to a movement trajectory of the support member 240. According to an embodiment, when the support member 240 fixed in such a manner of being attached to the rear surface of the rollable display 230 is movably coupled to the guide rails 226, the guide structure in which the guide protrusions 2411 move along the guide slits 2611 may help reduce a phenomenon in which the rollable display 230 is separated or deformed during operation.

FIG. 6A is a partial cross-sectional view of the electronic device according to various embodiments of the disclosure taken along line 6a-6a in FIG. 2A. FIG. 6B is a cross-sectional view of the electronic device according to various embodiments of the disclosure taken along line 6b-6b in FIG. 3A.

In describing the electronic device of FIGS. 6A and 6B, the same reference numerals are assigned to components that are substantially the same as those of the electronic device of FIG. 4, and a detailed description thereof may be omitted.

Referring to FIGS. 6A and 6B, the electronic device 200 may include: a first housing 210 including a first space 2101; a second housing 220 including a second space 2201; a support member 240 connected to the first housing 210 and at least partially accommodated in the first space 2101 in a bending manner in the slide-in state; a rollable display 230 disposed to be supported by at least a portion of the support member 240 and at least a portion of the second housing 220; and a driving motor 260 including a pinion gear (e.g., the pinion gear 261 in FIG. 5A) disposed in the first space 211 and gear-coupled with a rack gear (e.g., the rack gear 2201 in FIG. 4) in the second space 2201. According to an embodiment, the driving motor 260 may automatically move the second housing 220 in the slide-in direction (direction ②) or slide-out direction (direction ①) with reference to the first housing 210.

According to various embodiments, in the slide-in state of the electronic device 200, at least a portion of the second housing 220 may be accommodated in the first space 2101 of the first housing 210. According to an embodiment, the first extension member 212 may be slidably coupled and guided by the support bracket 225 disposed in the second space 2201.

According to various embodiments, the rollable display 230 may include a display area 230-1, an accommodation area 230-2, and a bending area 230-3. The display area 230-1, the accommodation area 230-2, and the bending area 230-3 are conceptually divided into respective areas of the rollable display 230 for convenience of description. Accordingly, respective areas may not be physically or visually differentiated. The display area 230-1 may be an area in which the rollable display 230 is visually recognized from the outside of the electronic device 200. Through the display area 230-1, the user may identify visual information displayed through the rollable display 230. The accommodation area 230-2 may be an area in which the rollable display 230 is accommodated into the electronic device 200. The accommodation area 230-2 is a portion covered by other mechanical objects (e.g., the first housing 210, the second housing 220, the first extension member 212, the second extension member 222, and the like), and may be an area that is not visually recognized from the outside of the electronic device 200. The bending area 230-3 may be an area between the display area 230-1 and the accommodation area 230-2. The bending area 230-3 may be a deformed area of the rollable display 230. The support member 240 bent according to the shape of the guide rails 226 may support the bending area 230-3. Unlike the display area 230-1 and the accommodation area 230-2 which are substantially parallel to the sliding direction of the electronic device 200 (e.g., the Y direction in FIG. 6A), the bending area 230-3 may be an area in which the rollable display 230 is maintained in a deformed state.

In various embodiments, when the second housing 220 is slid relative to the first housing 210 in direction ①, the display area 230-1 may increase and the accommodation area 230-2 may decrease. In contrast, when the first housing 210 is slid relative to the second housing 220 in direction ②, the display area 230-1 may decrease and the accommodation area 230-2 may increase. The above-described sliding of the first housing 210 may be automatically executed by the driving motor 260.

According to various embodiments, the driving motor 260 and electronic components (e.g., the first printed circuit board 251 and the battery B) arranged in the first housing 210 may move together according to the slide-in/slide-out operation of the first housing 210. There, compared to the arrangement structure in which the corresponding components are arranged in the second housing 220 and connected to the first printed circuit board 251 via electrical connection members, the number of electrical connection members are minimized, which may help improve the operation reliability of the electronic device 200 and to design an efficient arrangement of electronic components.

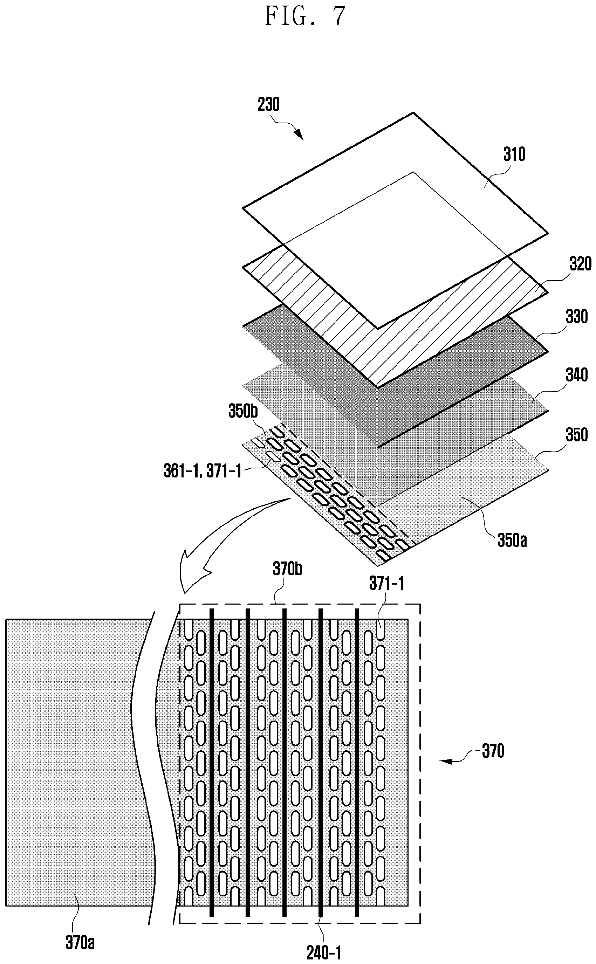

FIG. 7 is an exploded perspective view of a display according to various embodiments of the disclosure.

Hereinafter, since components similar to those of the electronic device 200 described above are included, redundant descriptions of components will be omitted, and the same or similar components will be described by using the same reference numerals unless necessary.

The rollable display 230 (e.g., the display module 160 in FIG. 1 or the rollable display 230 in FIG. 2A) according to various embodiments disclosed herein may include an unbreakable (UB) type OLED display (e.g., a curved display). However, the disclosure is not limited thereto, and the rollable display 230 may include a flat type display of an on-cell-touch active-matrix organic light-emitting diode (AMOLED) (OCTA) type.

According to various embodiments, as illustrated in FIG. 7, the rollable display 230 may include: a window layer 310; and a polarizer (POL) 320 (e.g., a polarizing film), a display panel 330, a polymer layer 340, and a support plate 350 which are sequentially disposed under the window layer 310. In some embodiments, the rollable display 230 may include a digitizer panel disposed under the support plate 350. In some embodiments, the digitizer panel may be disposed between the polymer layer 340 and the support plate 350.

According to various embodiments, the window layer 310 may include a glass layer. According to an embodiment, the window layer 310 may include ultra-thin glass (UTG). In some embodiments, the window layer 310 may include a polymer. In this case, the window layer 310 may include polyethylene terephthalate (PET) or polyimide (PI). In some embodiments, the window layer 310 may be arranged in a plurality of layers to include a glass layer and a polymer.

According to various embodiments, the display panel 330 may include a plurality of pixels and a wiring structure. According to an embodiment, the polarizer 320 may selectively make light, which is generated from a light source of the display panel 330 and vibrates in a predetermined direction, pass therethrough. According to an embodiment, the display panel 330 and the polarizer 320 may be integrally configured. According to an embodiment, the rollable display 230 may include a touch panel (not illustrated).

According to various embodiments, the polymer layer 340 may be arranged under the display panel 330, thereby providing a background for securing visibility of the display panel 330, and may be made of a buffering material for a buffering action. In some embodiments, in order to waterproof the rollable display 230, the polymer layer 340 may be removed or disposed under the support plate 350.

According to various embodiments, the support plate 350 may be configured to support the rollable display 230 in which a partial area is bent. For example, the support plate 350 has a bending property and may be made of a non-metal sheet-shaped material having a rigid (rigid) property for supporting the display panel 330, such as fiber reinforced plastics (FRP) (e.g., carbon fiber reinforced plastics (CFRP) or glass fiber reinforced plastics (GFRP)). In some embodiments, the support plate 350 may be made of a metal material such as steel use stainless (SUS) (e.g., stainless steel (STS)), Cu, Al, or a metal CLAD (e.g., a laminated member in which SUS and Al are alternately disposed). The support plate 350 may help reinforce the rigidity of the electronic device 200 (e.g., the electronic device 101 in FIG. 1), and may be used to shield ambient noise and dissipate heat emitted from surrounding heat dissipating components.

In an embodiment, referring to FIG. 7, the support plate 350 may include a flat portion 350a and a flexible or bending portion 350b. The flat portion 350a is an area that maintains the flatness of the support plate 350, and may be an area disposed in the first housing 210 and the second housing 220 to support the rollable display 230. For example, the flat portion 350a may support the first portion 230a through which the rollable display 230 is visible from the outside. The flat portion 350a may be an area corresponding to the first portion 230a of the rollable display 230. The bending portion 350b may support the second portion 230b (e.g., a bendable portion) of the rollable display 230 partially accommodated in the first space 2101 of the second housing 220. In an embodiment, the bending portion 350b may be an area corresponding to the second portion 230b of the rollable display 230. At least a portion of the bending portion 350b may be an area corresponding to the bending area 230-3 of the rollable display 230. The bending portion 350b may be an area bent with respect to the flat portion 350a together with the support member 240 including the multiple bars 240-1 (e.g., the multi-bars 241 in FIG. 5B). The bending portion 350b may include a plurality of openings disposed at a predetermined interval. With the openings, the bending portion 350b may secure flexibility to be flexibly bent with respect to the flat portion 350a. According to an embodiment, the bending property of the bending portion 350b may be determined based on at least one of a size, a shape, or an arrangement density of at least some of the plurality of openings.

According to various embodiments, the rollable display 230 may include, as a detection member, a digitizer panel disposed under the support plate 350 and configured to receive an input of an electronic pen (e.g., a stylus). According to an embodiment, the digitizer panel may include coil members disposed on a dielectric substrate (e.g., a dielectric film or a dielectric sheet) to detect an electromagnetically induced resonance frequency applied by the electronic pen.

According to an embodiment, the window layer 310, the polarizer 320, the display panel 330, the polymer layer 340, the first support plate 360, and the second support plate 370 may be bonded to each other via a pressure-sensitive adhesive P. For example, the adhesive P may include at least one of an optical clear adhesive (OCA), a pressure-sensitive adhesive (PSA), a heat-responsive adhesive, a general adhesive, and a double-sided tape.

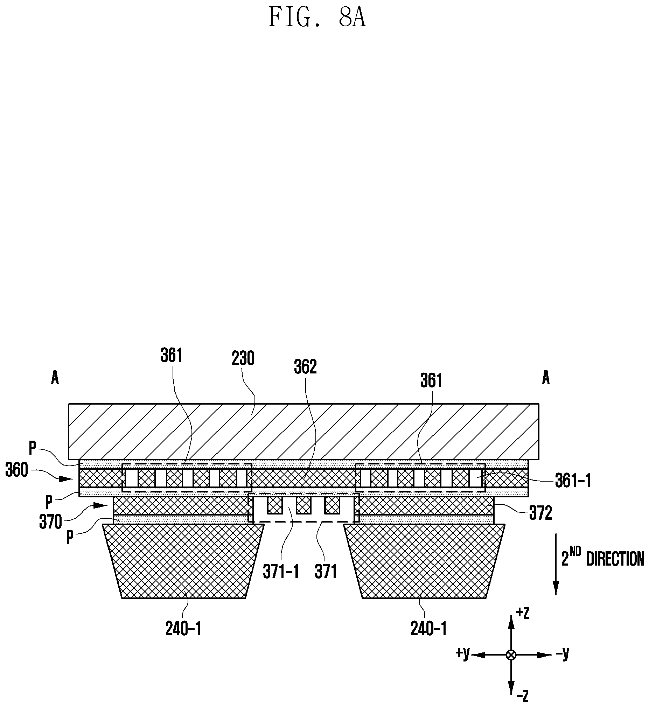

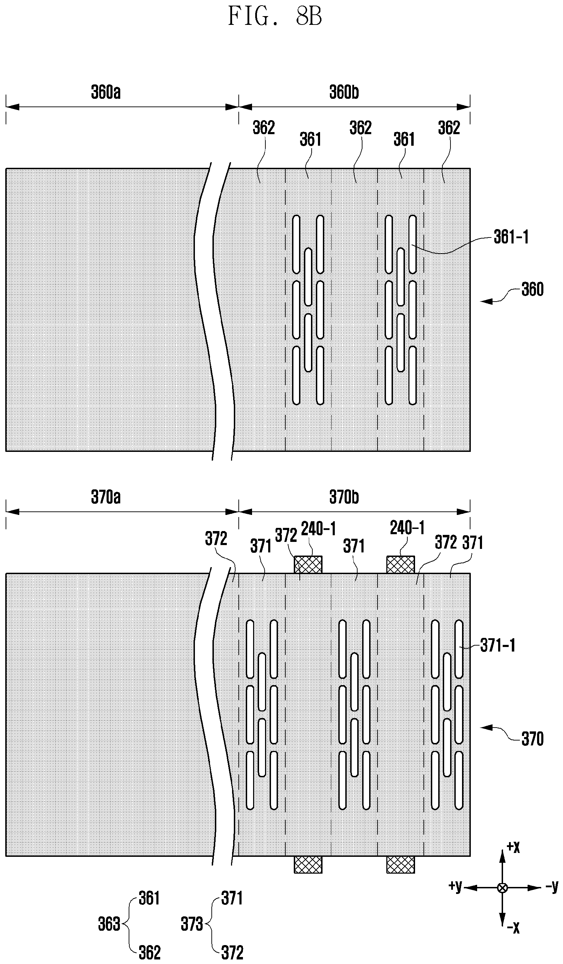

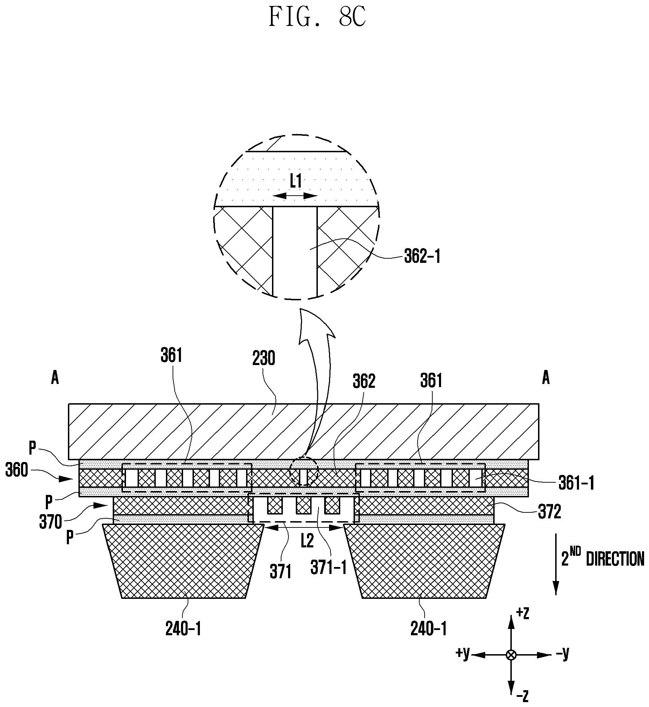

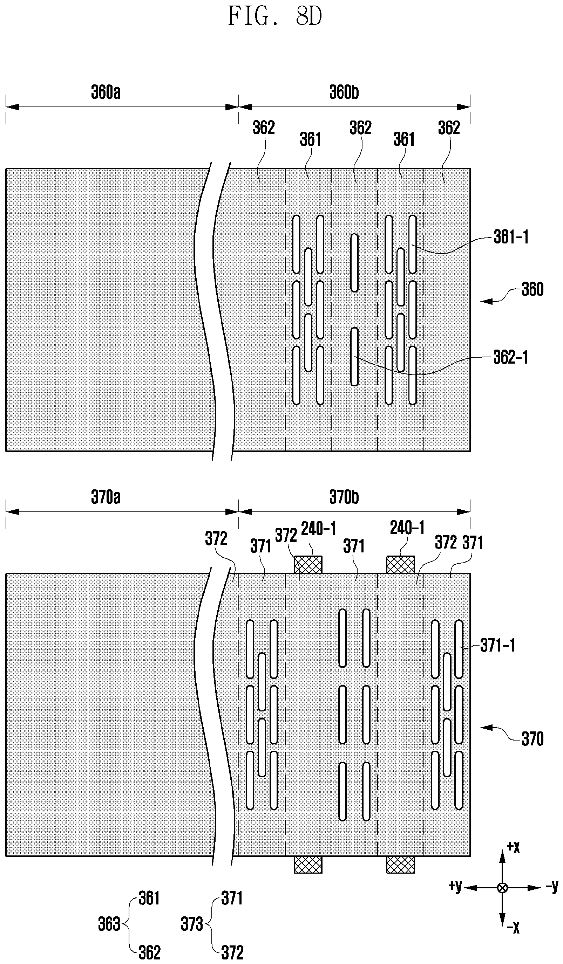

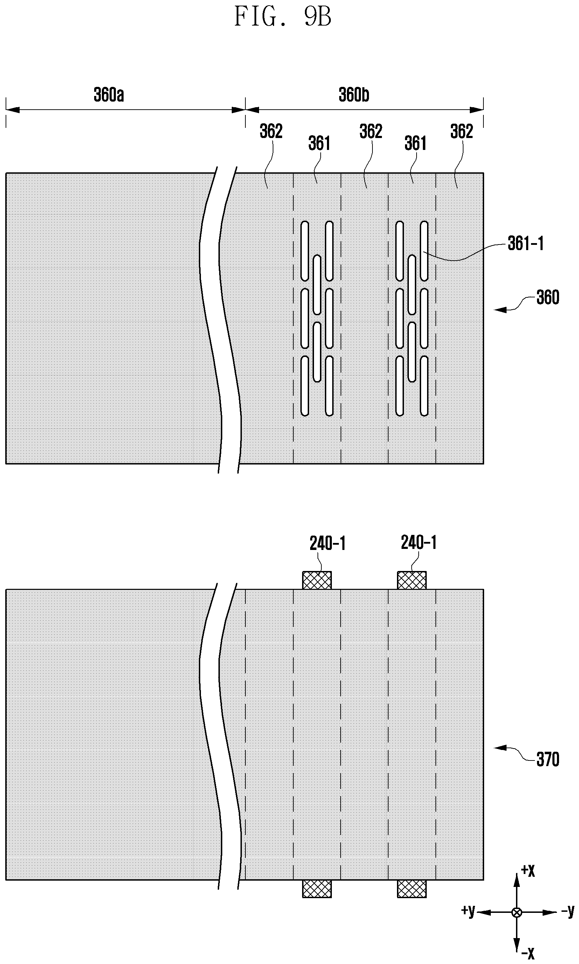

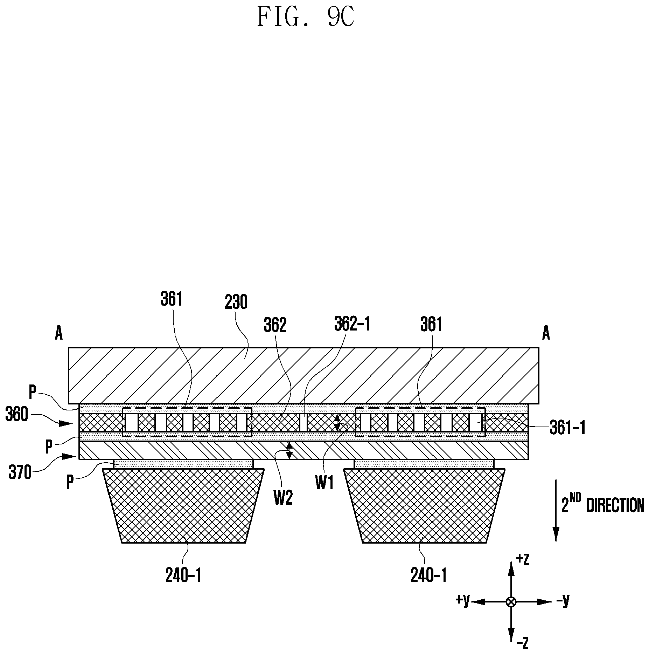

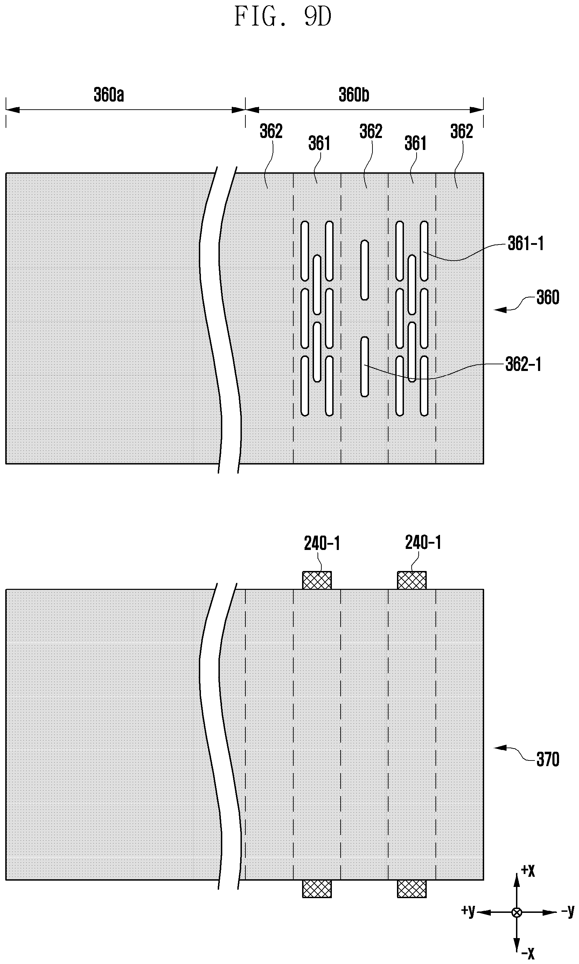

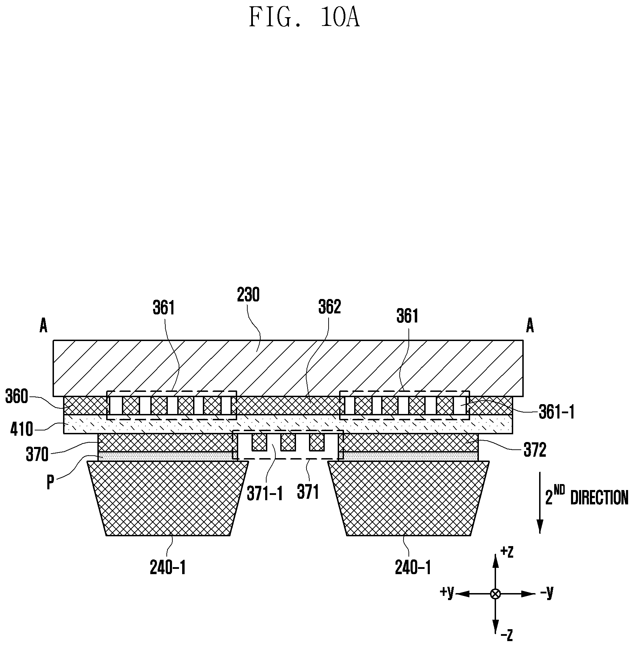

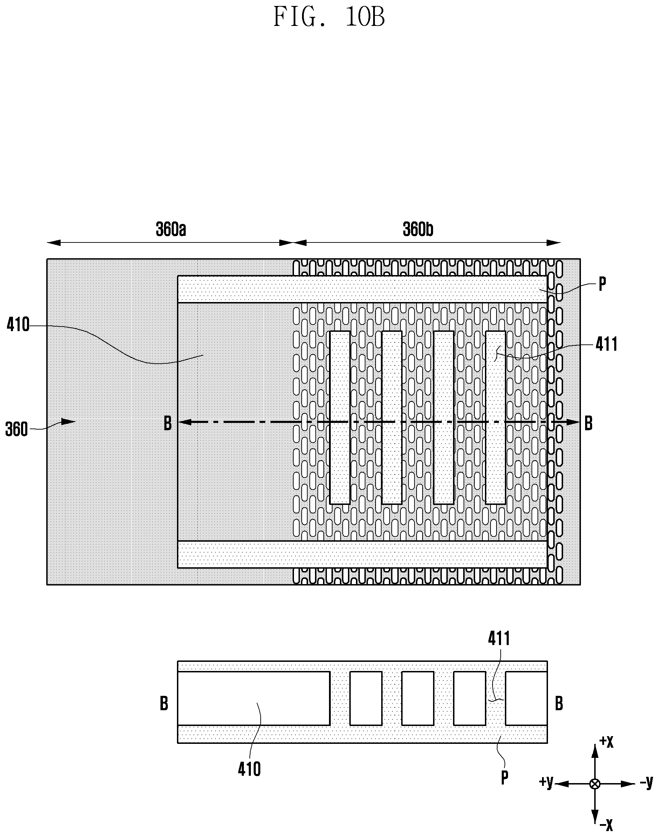

FIG. 8A is a cross-sectional view taken along line A-A of FIG. 3A to show the stacked structure of the rollable display 230 and the support member 240. FIG. 8B is a view illustrating a stacked relationship between the first support plate 360 and the second support plate 370 illustrated in FIG. 8A. FIG. 8C is a view illustrating a state in which openings are provided in the second area 362 of the first support plate 360 in the embodiment illustrated in FIG. 8A. FIG. 8D is a view illustrating a stacked relationship between the first support plate 360 and the second support plate 370 illustrated in FIG. 8C. FIG. 9A is a cross-sectional view taken along line A-A of FIG. 3A to show the stacked structure of the rollable display 230 and the support member 240 in another embodiment. FIG. 9B is a view illustrating a stacked relationship between the first support plate 360 and the second support plate 370 illustrated in FIG. 9A. FIG. 9C is a view illustrating a state in which openings are provided in the second area 362 of the first support plate 360 in the embodiment illustrated in FIG. 9A. FIG. 9D is a view illustrating a stacked relationship between the first support plate 360 and the second support plate 370 illustrated in FIG. 9C. FIG. 10A is a view illustrating a buffer member 410 disposed between the first support plate 360 and the second support plate 370 according to various embodiments of the disclosure. FIG. 10B is a view illustrating openings provided in the buffer member 410 and an adhesive P filled in the openings according to various embodiments of the disclosure.

In the above description, it has been described that the rollable display 230 (e.g., the display module 160 in FIG. 1) includes: a window layer 310; and a polarizer (POL) 320 (e.g., a polarizing film), a display panel 330, a polymer layer 340, and a support plate 350, which are sequentially disposed under the window layer 310. Hereinafter, for convenience of description, the rollable display 230 and the support plate 350 will be separately described. In other words, the rollable display 230 will be described assuming that the rollable display 230 includes a window layer 310, a polarizer 320, a display panel 330, and a polymer layer 340, and the rollable display 230 and the support plate 350 are separate components. However, this is only for convenience of description, and may not exclude an embodiment in which the support plate 350 is included in the rollable display 230 (e.g., FIG. 7).

According to various embodiments, the support plate 350 may include a first support plate 360 and a second support plate 370. The first support plate 360 may be disposed under the display panel 330 (e.g., in the -Z direction with reference to FIG. 7A) to support the display panel 330. The second support plate 370 may be disposed under the first support plate 360 (e.g., in the -Z direction with respect to FIG. 7A) to support the first support plate 360. An adhesive P may be disposed between the rollable display 230 and the first support plate 360 and between the first and second support plate 360 and 370. The first support plate 360 and the second support plate 370 may be coupled to each other via the adhesive P to support the rollable display 230.

In an embodiment, the first and second support plates 360 and 370 have a bending property and may be made of a non-metal sheet-shaped material having a rigid property for supporting the display panel 330, such as fiber reinforced plastics (FRP) (e.g., carbon fiber reinforced plastics (CFRP) or glass fiber reinforced plastics (GFRP)). In some embodiments, the support plate 350 may be made of a metal material such as steel use stainless (SUS) (e.g., stainless steel (STS)), Cu, Al, or a metal CLAD (e.g., a laminated member in which SUS and Al are alternately disposed). In an embodiment, the first support plate 360 and the second support plate 370 may be made of the same material among the above-mentioned materials. In another embodiment, the first support plate 360 and the second support plate 370 may be made of different materials.

In an embodiment, the second support plate 370 may be coupled to the support member 240. Referring to FIG. 8A, the support member 240 may be disposed under the second support plate 370 (in the direction of -Z with reference to FIG. 8A) and may be coupled to the second support plate 370 via the adhesive P. Accordingly, the first support plate 360 and the second support plate 370 may be bent along the support member 240 in the bending area 230-3 of the rollable display 230.

According to various embodiments, the first support plate 360 may include a first flat portion 360a and a first bending portion 360b. The first flat portion 360a of the first support plate 360 may have substantially the same configuration as the flat portion 350a of the above-described support plate 350. In addition, the first bending portion 360b of the first support plate 360 may have substantially the same configuration as the bending portion 350b of the above-described support plate 350. For example, the first flat portion 360a may support the first portion 230a of the rollable display 230 to maintain the flatness of the first portion 230a of the rollable display 230. The first bending portion 360b may support the second portion 230b (e.g., a bendable portion) of the rollable display 230. In an embodiment, the first bending portion 360b may be an area corresponding to the second portion 230b of the rollable display 230. At least a portion of the first bending portion 360b may correspond to the bending area 230-3 of the rollable display 230. Similarly, the second flat portion 370a of the second support plate 370 may have (preferably substantially) the same configuration as the flat portion 350a of the above-described support plate 350. In addition, the second bending portion 370b of the second support plate 370 may have (preferably substantially) the same configuration as the bending portion 350b of the above-described support plate 350. For example, the second flat portion 370a may support the first portion 230a of the rollable display 230 to maintain the flatness of the first portion 230a of the rollable display 230. The second bending portion 370b may support the second portion 230b (e.g., a bendable portion) of the rollable display 230. In an embodiment, the second bending portion 370b may be an area corresponding to the second portion 230b of the rollable display 230. At least a portion of the second bending portion 370b may correspond to the bending area 230-3 of the rollable display 230.

According to various embodiments, the support plate 350 may include a plurality of openings (e.g., the first openings 361-1 and the second openings 371-1) such that the rollable display 230 is flexibly bendable in the bending area 230-3. In an embodiment, the first support plate 360 and the second support plate 370 may include a plurality of openings. The plurality of openings may be provided in each of the first support plate 360 and the second support plate 370 to be located in an area corresponding to the second portion 230b of the rollable display 230 that is fed into or fed out of the first space 2101 according to the sliding of the first housing 210 and the second housing 220. For example, the plurality of openings may be provided in the bending portion 350b of the support plate 350 corresponding to the second portion 230b of the rollable display 230. In an embodiment, the openings (e.g., the first openings 361-1) provided in the first support plate 360 may be provided in the first bending portion 360b of the first support plate 360. In addition, the openings (e.g., the second openings 371-1) provided in the second support plate 370 may be provided in the second bending portion 370b of the second support plate 370. The first support plate 360 and the second support plate 370 may secure a bendable feature with the plurality of openings 361-1 and 371-1. Accordingly, the rollable display 230 may be bent together with the support plate 350 and the support member 240 in the bending area 230-3.

According to various embodiments, as illustrated in FIGS. 8A and 8B, the support plate 350 may include a plurality of patterns 363 and 373. The plurality of patterns 363 and 373 may each be divided into an area which is provided with a plurality of openings and an area which is not provided with a plurality of openings. Flexibility of the support plate 350 may be determined based on at least one of the size, the shape, or the arrangement density of the plurality of openings.

In an embodiment, referring to FIGS. 8A and 8B, the first support plate 360 may include a first pattern 363. The first pattern 363 may include a first area 361 which is provided with a plurality of first openings 361-1 and a second area 362 which is not provided with the first openings 361-1. The first pattern 363 may have a shape in which the first area 361 and the second area 362 alternate. The first pattern 363 may be provided in the first bending portion 360b of the first support plate 360. The first bending portion 360b may correspond to the second portion 230b of the rollable display 230 that is a portion in which the rollable display 230 is bent. Accordingly, the plurality of first openings 361-1 included in the first pattern 363 may be located to correspond to the second portion 230b of the rollable display 230, and at least some of the first openings may be located in the bending area 230-3 of the rollable display 230. Accordingly, the first support plate 360 may be flexibly bent in the bending area 230-3 of the rollable display 230 with the first patterns 363. Similarly, the second support plate 370 may include a second pattern 373. The second pattern 373 may include a third area 371 which is provided with a plurality of second openings 371-1 and a fourth area 372 which is not provided with the second openings 371-1. The second pattern 373 may have a shape in which the third area 371 and the fourth area 372 alternate. The second pattern 373 may be provided in the second bending portion 370b of the second support plate 370. The second bending portion 370b may correspond to the second portion 230b of the rollable display 230 that is a portion in which the rollable display 230 is bent. Accordingly, the plurality of second openings 371-1 included in the second pattern 373 may be located to correspond to the second portion 230b of the rollable display 230, and at least some of the second openings may be located in the bending area 230-3 of the rollable display 230. Accordingly, the second support plate 370 may be flexibly bent in the bending area 230-3 of the rollable display 230 with the second patterns 373.

However, this is not intended to mean that the first openings 361-1 of the first support plate 360 and the second openings 371-1 of the second support plate 370 are only located in the second portion 230b of the rollable display 230. In an embodiment, at least some of the first openings 361-1 and the second openings 371-1 may be located in the first portion 230a of the rollable display 230.

According to various embodiments, as illustrated in FIGS. 8A to 9D, the support member 240 may be coupled to the second support plate 370. The support member 240 may be disposed under (in the -Z direction with reference to FIG. 8A) the second support plate 370 to support the second support plate 370. In an embodiment, the support member 240 may be bonded to the second support plate via the adhesive P. In order to secure an area to be coupled with the second support plate 370, the multiple bars 240-1 of the support member 240 may be disposed in the fourth area 372 which is not provided with the second openings 371-1. Accordingly, a coupling force of a predetermined level or higher may be secured between the support member 240 and the second support plate 370.

The bending support 240 may include multiple bars 240-1 split from each other. The multiple bars 240-1 may be arranged at a predetermined interval (e.g., L2 in FIG. 8C) in order to make the rollable display 230 bendable while the rollable display 230 is fed into or fed out of the inside of the electronic device 200 (e.g., the electronic device 101 in FIG. 1). In this case, empty spaces may be disposed between the multiple bars 240-1. Therefore, when an external force is applied to an area of the rollable display 230 corresponding to a space between the multiple bars 240-1, the rollable display 230 may be damaged as the area is pressed toward an empty space.

In addition, as described above, in order to ensure that a bonding strength of a predetermined level or higher is secured with the second support plate 370, the multiple bars 240-1 may be arranged in the fourth areas 372 of the second support plate 370, which are not provided with the second openings 371-1. Accordingly, at least some of the second openings 371-1 provided in the third area 371 of the second support plate 370 may be located between the multiple bars 240-1. By being provided with the second opening 371-1, the third area 371 may be less rigid than the fourth area 372 which is not provided with the second openings 371-1. Accordingly, when an external force is applied to an area of the rollable display 230 corresponding to one of the empty spaces between the multiple bars 240-1, not only the rollable display 230 but also the second support plate 370 supporting the rollable display 230 may be damaged.

According to various embodiments disclosed herein, the first support plate 360 and the second support plate 370 may be disposed so as not to overlap the first openings 361-1 of the first support plate 360 and the second openings 371-1 of the second support plate 370 when the rollable display 230 is viewed in a second direction (e.g., the -Z direction with reference to FIG. 8A) perpendicular to a first direction (e.g., the first direction in FIG. 2A or the Y-axis direction with reference to FIG. 2A) which is the sliding direction of the electronic device 200. In some embodiments, the first openings 361-1 of the first support plate 360 and the second openings 371-1 of the second support plate 370 may partially overlap each other. For example, the first area 361 of the first support plate 360 may partially overlap the third area 371 of the second support plate 370 which is provided with the second openings 371-1 although a main portion of the first area 361 of the first support plate 360 does not overlap the third area 361 of the second support plate 370. Here, the main portion of the first area 361 may mean an area occupying 50% or more of the total area of the first area 361.

In an embodiment, referring to FIGS. 8A and 8B, when the first support plate 360 and the second support plate 370 are viewed in the second direction, the second area 362 of the first support plate 360, which is not provided with the first openings 361-1 may overlap the third area 371 of the second support plate 370. In addition, the spaces between the multiple bars 240-1 may overlap the second area 362 of the first support plate 360. Accordingly, when an external force is applied to an area of the rollable display 230 corresponding to any of the spaces between the multiple bars 240-1, the area of the rollable display 230 may be supported with the second area 362 of the first support plate 360. Accordingly, a phenomenon in which the rollable display 230 and the second support plate 370 are damaged by an external force may be alleviated or eliminated.

Meanwhile, the flexibility and rigidity of the support plate 350 may vary depending on the thickness of the support plate 350 (e.g., the length in the Z-axis direction with reference to FIG. 8A). In an embodiment, as the thickness of the support plate 350 decreases, the flexibility of the support plate 350 may increase and the rigidity of the support plate 350 may decrease. In contrast, as the thickness of the support plate 350 increases, the flexibility of the support plate 350 may decrease and the rigidity of the support plate 350 may increase. Accordingly, the support plate 350 may have a thickness of a predetermined level or more in order to secure rigidity, and may secure flexibility by including openings. According to various embodiments disclosed herein, the first support plate 360 which is provided with the first openings 361-1 and the second support plate 370 which is provided with the second openings 371-1 may be coupled to each other via an adhesive P. As the first support plate 360 and the second support plate 370 are coupled to each other, the overall thickness of the support plate 350 may increase. Accordingly, the rigidity of the support plate 350 may increase. Meanwhile, the first support plate 360 and the second support plate 370 may be disposed such that the first area 361 of the first support plate 360 which is provided with the first openings 361-1 and the fourth area 372 of the second support plate 370 which is not provided with the second openings 371-1 do not overlap each other when the rollable display 230 is viewed in the second direction. In addition, the first support plate 360 and the second support plate 370 may be disposed such that the second area 362 of the first support plate 360 which is not provided with the first openings 361-1 and the third area 371 of the second support plate 370 which is provided with the second openings 371-1 overlap each other. Accordingly, when the rollable display 230 is viewed in the second direction, the first openings 361-1 and the second openings 371-1 may be alternately arranged without overlapping each other. In this case, the flexibility of the support plate 350 may be increased compared to the case where an area of the first support plate 360 which is not provided with openings (e.g., the second area 362) and an area of the second support plate 370 which is not provided openings overlap each other.

In a comparative embodiment, only a single support plate 350 may be disposed under the rollable display 230 rather than the structure in which the first support plate 360 and the second support plate 370 overlap in the second direction as described above. In this case, in the support plate 350, the area which is provided with openings and the area which is not provided with openings may have different thicknesses (e.g., a length in the Z-axis direction with reference to FIG. 8A). Accordingly, in the bending area 230-3 of the rollable display 230 where the rollable display 230 and the support plate 350 are bent, the curvature radii of the above-mentioned areas of the support plate 350 may be different from each other. In this case, the entire area of the support plate 350 in the bending area 230-3 may not be uniformly bent. For example, in the support plate 350, the area provided with openings may rise in the Z-axis direction with reference to FIG. 6A in the bending area 230-3 compared to the area not provided with openings. Accordingly, at least a portion of the rollable display 230 supported by the support plate 350 may rise from the bending area 230-3 together with the support plate 350.

In various embodiments disclosed herein, as the first support plate 360 and the second support plate 370 overlapping and bonded to each other in the second direction, the thickness of the entire support plate 350 may be increased. In particular, referring to FIGS. 8A to 8D, the first support plate 360 and the second support plate 370 may be disposed such that the first openings 361-1 and the second openings 371-1 do not to overlap each other when the rollable display 230 is viewed in the second direction. In this case, the thickness of the entire support plate 350 (e.g., the length in the Z-axis direction with reference to FIG. 8A) may be constant. Accordingly, in the bending area 230-3, the entire area of the support plate 350 may be more uniformly bent compared to that in the comparative embodiment. Accordingly, the phenomenon in which the rollable display 230 supported by the support plate 350 rises from the bending area 230-3 may be alleviated or eliminated.

According to various embodiments, as illustrated in FIGS. 8C and 8D, the first support plate 360 may include (1-1)^{th} openings 362-1. The (1-1)^{th} openings 362-1 may be provided in the second area 362 of the first support plate 360. In this case, flexibility of the second area 362 of the first support plate 360 may be increased. Accordingly, the second area 362 of the first support plate 360 may be easily bent in the bending area 230-3 of the rollable display 230.

In an embodiment, referring to FIG. 8C, the width L1 (e.g., the length in the Y-axis direction with reference to FIG. 8C or FIG. 9C) of the (1-1)^{th} openings 362-1 of the first support plate 360 may be smaller than the interval L2 (e.g., the length in the Y-axis direction with reference to FIG. 8C or FIG. 9C) of the multiple bars 240-1. Accordingly, the first support plate 360 may cover the second openings 371-1 of the second support plate 370 with a remaining area other than the (1-1)^{th} openings 362-1 in the second area 362. In addition, in the second area 362 of the first support plate 360, the remaining area other than the (1-1)^{th} openings 362-1 may overlap the spaces between the multiple bars 240-1 when the rollable display 230 is viewed in the second direction. Accordingly, when an external force is applied to an area of the rollable display 230 corresponding to any of the spaces between the multiple bars 240-1, the area of the rollable display 230 may be supported with the second area 362 of the first support plate 360. Accordingly, the phenomenon in which the rollable display 230 is damaged by an external force may be alleviated or eliminated. In addition, the third area 371 of the second support plate 370 which is provided with the second openings 371-1 may be protected from an external force applied to the display with the second area 362 of the first support plate 360.

In an embodiment, referring to FIGS. 8C and 8D, the (1-1)^{th} openings 362-1 of the first support plate 360 may not overlap the second openings 371-1 provided in the third area 371 of the second support plate 370 when the first support plate 360 is viewed in the second direction. For example, the (1-1)^{th} openings 362-1 may overlap a remaining area other than the second openings 371-1 in the third area 371 of the second support plate 370. Accordingly, when an external force is applied to an area of the rollable display 230 corresponding to the (1-1)^{th} openings 362-1, the (1-1)^{th} openings 362-1 may be supported with a remaining area other than the second openings 371-1 in the third area 371 of the second support plate 370. Accordingly, when an external force is applied to an area of the rollable display 230 corresponding to the (1-1)^{th} openings 362-1, damage to the rollable display 230 and the first support plate 360 may not be caused.

In an embodiment, referring to FIG. 8D, the number of (1-1)^{th} openings 362-1 provided in the second area 362 of the first support plate 360 may be smaller than the number of the first openings 361-1 provided in the first area 361 of the first support plate 360. In some embodiments, the number of the (1-1)^{th} openings 362-1 may be equal to or greater than the number of the first openings 361-1.

According to various embodiments, the first support plate 360 may include the first openings 361-1 as described above. In contrast, as illustrated in FIGS. 9A to 9D, the second support plate 370 may not include openings (e.g., the second openings 371-1). In this case, since the second support plate 370 does not include the openings, the flexibility of the second support plate 370 may be reduced compared to that in the case where the openings are provided. Referring to FIG. 9A, in order to alleviate this problem, the thickness W2 of the second support plate 370 may be smaller than the thickness W1 of the first support plate 360. Accordingly, it is possible to secure a predetermined level of flexibility in the second support plate 370 in the state in which openings are not provided.

According to various embodiments, the multiple bars 240-1 disposed on the second support plate 370 may be bent in the bending area 230-3 of the rollable display 230. In the process in which the multiple bars 240-1 are bent in the bending area 230-3, the rollable display 230 may be pressed against the corners of the multiple bars 240-1. Here, the corners of the bars 240-1 may mean edges where surfaces of the bars 240-1 defining a plane meet each other. In particular, as described above, the second openings 371-1 may be provided in the second support plate 370 so that the second openings 371-1 may be located between the multiple bars 240-1. In this case, the display 230 may be pressed by the multiple bars 240-1 while the multiple bars 240-1 are bent in the bending area 230-3. Accordingly, the rollable display 230 may be damaged. In another embodiment disclosed herein, the second support plate 370 may not include the above-described second openings 371-1. Accordingly, in the process in which the multiple bars 240-1 are bent in the bending area 230-3, the corners of the multiple bars 240-1 may press the second support plate 370 first. Accordingly, the degree to which the rollable display 230 is pressed may be reduced. Accordingly, damage to the rollable display 230 may be alleviated or eliminated.

According to various embodiments, as illustrated in FIGS. 10A and 10B, a buffer member 410 may be disposed between the first support plate 360 and the second support plate 370. The buffer member 410 may be made of an elastic material, such as an acrylic-based material or a urethane-based material. Accordingly, the buffer member 410 may alleviate an impact applied to the inside of the electronic device 200 from an external force applied to the electronic device 200.

According to various embodiments, the buffer member 410 may include a plurality of third openings 411. The third openings 411 may be provided at positions corresponding to the second portion 230b of the rollable display 230, which is a portion where the rollable display 230 is bent, and at least some of the third openings 411 may be located in the bending area 230-3 of the rollable display 230. Accordingly, the buffer member 410 may be flexibly bent in the bending area 230-3 of the rollable display 230.

According to various embodiments, the buffer member 410 may be bonded to the first support plate 360 and the second support plate 370 via an adhesive P. In the buffer member 410, the adhesive P may be disposed on the surface facing the first support plate 360 (e.g., the surface oriented in the +Z direction with reference to FIG. 10A) and the surface facing the second support plate 370 (e.g., the surface oriented in the -Z direction with reference to FIG. 10A). In an embodiment, referring to FIG. 10B, the third openings 411 of the buffer member 410 may be filled with the adhesive P. In this case, the adhesive P disposed on the surface facing the first support plate 360 and the surface facing the second support plate 370 may be connected to each other via the adhesive P filled in the third openings 411. In this case, the thickness (e.g., the length in the Z-axis direction with reference to FIG. 10A) of the adhesive P disposed on the buffer member 410 may increase in the area provided with the third openings 411. Accordingly, since the thickness of the adhesive P increases, the bonding force between the buffer member 410 and the first and second support plates 360 and 370 may increase.

According to various embodiments, although not illustrated in the figures, a heat dissipation member (not illustrated) may be disposed between the first support plate 360 and the second support plate 370. The heat dissipation member may be made of a thermally conductive material such as graphite or copper (CU). Accordingly, the heat dissipation member may transfer heat generated inside the electronic device 200 to peripheral mechanical objects such as the first support plate 360 and/or the second support plate 370.

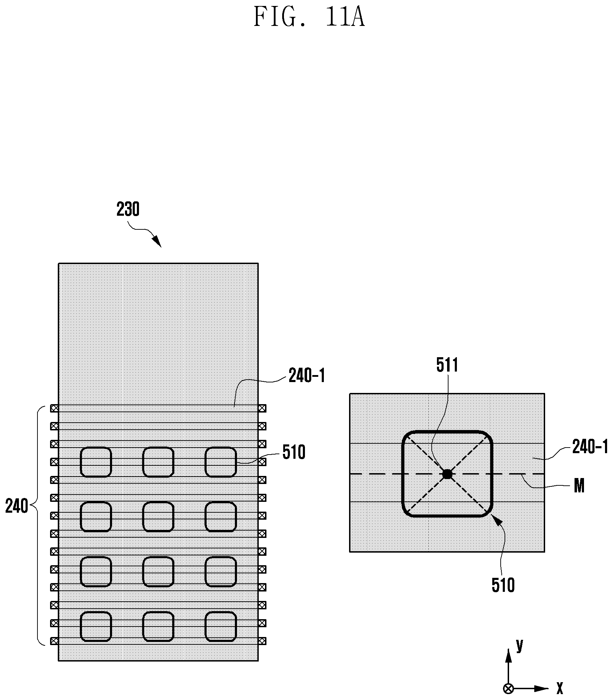

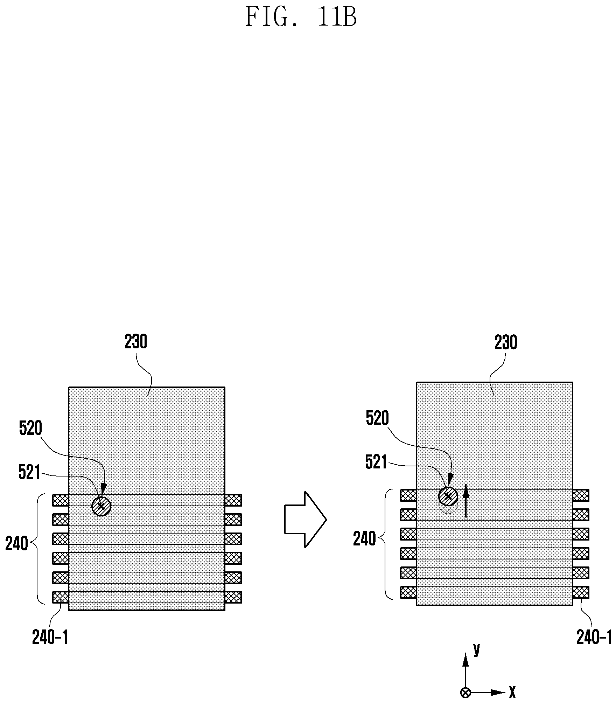

FIG. 11A is a view illustrating a state in which a user interface (UI) 520 containing visual information is displayed on one area of the rollable display 230 corresponding to an area in which the multiple bars 240-1 of the support member 240 are located, according to various embodiments of the disclosure. FIG. 11B is a view illustrating a state in which a UI 520 containing visual information and displayed on the rollable display 230 moves to one area of the rollable display 230 corresponding to an area in which the multiple bars 240-1 of the support member 240 are located, according to various embodiments of the disclosure.

According to various embodiments, a processor (e.g., the processor 120 of FIG. 1) may cause a user interface (UI) 520 containing visual information to be displayed on the rollable display 230 (e.g., the display module 160 in FIG. 1). In an embodiment, the rollable display 230 may include thereon an area 510 in which a visual UI 520 is displayed. The area 510 on the display may correspond to an area in which the multiple bars 240-1 of the support member 240 are located. The position of an area 510 on the display corresponding to the position of the bars 240-1 may be stored in advance in a memory (e.g., the memory 130 in FIG. 1) connected to the processor. For example, referring to FIG. 11A, the central portion 511 of the area 510 on the display may be located on the bars 240-1 or the central portion M of the bars 240-1 when the rollable display 230 is viewed in the second direction (e.g., in the Z-axis direction with reference to FIG. 11A). The processor may control the rollable display 230 such that the central portion 521 of the UI 520 is aligned with the central portion 511 of the area 510 on the display located on the central portion M of the bars 240-1. Here, the central portion 511 of the area 510 on the display and the central portion 521 of the UI 520 are the portions in which the rollable display 230 and the UI 520 are frequently touched when a user touches the UI 520 displayed on the rollable display 230. In addition, the central portion of the area 510 on the display and the central portion 521 of the UI 520 may be the center point of a circular or square button or an application displayed on the rollable display 230. The central portion M of the corresponding bar 240-1 may be a line connecting the center point or the horizontal length (e.g., the length in the X-axis direction with reference to FIG. 11A) or the center point of the vertical length (e.g., the length in the Y-axis direction with reference to FIG. 11A) of the bars 240-1 as illustrated in FIG. 11A.

In an embodiment, the processor may receive the location of the area 510 on the display from the rollable display 230 and may control the rollable display 230 to display the UI 520 in the area 510 on the display. The position of the area 510 on the display corresponding to the position of the bars 240-1 may be stored in advance in the memory connected to the processor. For example, information on the central portion 511 of an area 510 on the display located on the bars 240-1 may be stored in advance in the memory connected to the processor. The processor may receive information on the area 510 on the display from the memory and may control the rollable display 230 such that the UI 520 is displayed on the area 510 on the display. For example, the processor may control the rollable display 230 such that the central portion 521 of the UI 520 is aligned with the central portion 511 of the area 510 on the display to display the UI 520 on the area 510 on the display. Accordingly, the processor may control the rollable display such that the central portion 521 of the UI 520 is located on the bars 240-1 or the central portion M of the bars 240-1 when the rollable display 230 is viewed in the second direction. As the central portion 521 of the UI 520 is located on the bars 240-1, even if the user repeatedly touches the UI 520, the area of the rollable display 230 (e.g., the area 510 on the display) which is touched by the user may be supported by the multiple bars 240-1.

According to various embodiments, as illustrated in FIG. 11B, the central portion 521 of the UI 520 may be located in an area 510 on the rollable display 230 corresponding to a space between the multiple bars 240-1 when the rollable display 230 is viewed in the second direction (e.g., the Z-axis direction with reference to FIG. 11A). In this case, at least a portion of the area 510 on the rollable display 230 in which the UI 520 is displayed may correspond to an empty space between the multiple bars 240-1. Accordingly, an area corresponding to a space between the multiple bars 240-1 in the area 510 on the display may be pressed by a user's touch, and the rollable display 230 may be damaged. In addition, the support plate 350 disposed under the rollable display 230 may be damaged. In various embodiments disclosed herein, the central portion 521 of the UI 520 may be located in an area 510 on the rollable display 230 corresponding to a space between the multiple bars 240-1. The processor may detect that a user touches the UI 520 a specific number of times or more in the area 510 corresponding to a space between the multiple bars 240-1 on the rollable display 230. In this case, the rollable display 230 may generate a signal when the area corresponding to a space between the multiple bars 240-1 in the area 510 on the display is touched the specific number of times or more. The processor may receive the signal generated from the rollable display 230 and may identify that the area corresponding to a space between the multiple bars 240-1 in the area 510 on the display is touched the specific number of times or more. In this case, the processor may control the rollable display 230 such that the central portion 521 of the UI 520 is located on the bars 240-1 or the center M of the bars 240-1. For example, from the memory, the processor may receive the position of the area 510 on the display at which the central portion 511 is located on the bars 240-1, and may control the rollable display 230 such that the UI 520 moves to the corresponding area 510 on the display. Accordingly, damage caused to the rollable display 230 or the support plate 350 by repeatedly pressing an area corresponding to a space between the multiple bars 240-1 in the area 510 on the display may be alleviated or prevented.

An electronic device 200 (e.g., the electronic device 101 in FIG. 1) according to various embodiments disclosed herein may include: a first housing 210; a second housing 220 slidably coupled to the first housing; a rollable display 230 (e.g., the first display module 160 in FIG. 1) including a first portion 230a visible from the exterior of the electronic device, and a second portion 230b extending from the first portion and configured to be at least partially drawn into a first space (e.g., the second space 2201) of the electronic device or drawn out of the first space, the rollable display 230 (e.g., the display module 160 in FIG. 1) having a display area that is contracted or expanded based on sliding of the second housing; a first support plate 360 disposed under the rollable display (e.g., -Z direction with reference to FIG. 8A) and configured to support the rollable display, the first support plate 360 including a plurality of first openings 361-1; a second support plate 370 disposed under the first support plate and including a plurality of second openings 371-1; and a support member 240 including multiple bars 240-1 including a bendable structure, configured to move through the sliding of the second housing, and disposed under the second support plate to support the rollable display.

In addition, the first support plate may include a first pattern 363 including a first area 361 including the first openings and a second area 362 other than the first area, at least a portion of the first pattern 363 being located in the second portion of the rollable display, and the second support plate may include a second pattern 373 including a third area 371 including the second openings and corresponding to the second area and a fourth area 372 corresponding to the first area, at least a portion of the second pattern 373 being located in the second portion of the rollable display.

At least some of the bars of the support member may be located in a fourth area of the second support plate to support the rollable display.

The first support plate may include (1-1)^{th} openings 362-1 provided in the second area, and the number of (1-1)^{th} openings provided in the second area may be smaller than the number of first openings provided in the first area of the first support plate.

The (1-1)th openings may have a width L1 smaller than the interval L2 of the multiple bars of the support member.

The (1-1)^{th} openings of the first support plate may do not overlap the second openings when the second openings provided in the third area of the second support plate when the first support plate is viewed vertically (e.g., the -Z direction with reference to FIG. 8A).

The electronic device may further include a buffer member 410 disposed between the first support plate and the second support plate, and made of an elastic material.

The buffer member may include a plurality of third openings 411, at least some of which are located in the second portion of the rollable display, and the third opening may be filled with an adhesive P.

The electronic device may further include a heat dissipation member disposed between the first support plate and the second support plate, and made of a thermally conductive material.

An electronic device 200 (e.g., the electronic device 101 in FIG. 1) according to various embodiments disclosed herein may include: a first housing 210; a second housing 220 slidably coupled to the first housing; a rollable display 230 (e.g., the first display module 160 in FIG. 1) including a first portion 230a visible from the exterior of the electronic device, and a second portion 230b extending from the first portion and configured to be at least partially drawn into a first space (e.g., the second space 2201) of the electronic device or drawn out of the first space, the rollable display 230 (e.g., the display module 160 in FIG. 1) having a display area that is contracted or expanded based on sliding of the second housing; a first support plate 360 disposed under the rollable display (in the -Z direction with reference to FIG. 9A) to support the rollable display and including a plurality of openings (e.g., the first openings 361-1 in FIG. 9A); a second support plate 370 disposed under the first support plate to support the first support plate; and a support member 240 including a bendable structure and configured to move through the sliding of the second housing, the support member 240 including multiple bars 240-1 disposed under the second support plate to support the rollable display.

The first support plate may include a pattern (e.g., the first pattern 363) including a first area 361 including the openings, and a second area 362 other than the first area, at least partially a portion of the pattern being located in the second portion of the rollable display.

At least some of the bars of the support member may be located in an area of the second support plate corresponding to the first area of the first support plate to support the rollable display.

The second support plate may have a thickness W2 (e.g., the length in the Y-axis direction with reference to FIG. 10A) may be smaller than the thickness W1 (e.g., the length in the Y-axis direction with reference to FIG. 10A) of the first support plate.

The first support plate and the second support plate may be made of different materials.

The first support plate may include openings (e.g., the (1-1)^{th} openings 362-1 in FIG. 9C) provided in the second area and the number of openings provided in the second area may be smaller than the number of the openings (e.g., the first openings 361-1 in FIG. 9A) provided in the first area of the first support plate.

The openings provided in the second area have a width (e.g., the length in the Y-axis direction with reference to FIG. 9C or the width L1 of the (1-1)^{th} openings 361-1 in FIG. 8C) smaller than the interval (e.g., the length in the Y-axis direction with reference to FIG. 9C or the interval L2 of the multiple bars 240-1 in FIG. 8C).

The electronic device may further include a buffer member 410 disposed between the first support plate and the second support plate, and made of an elastic material.

In addition, the buffer member may include a plurality of openings (e.g., the third openings 411 in FIG. 10B), at least some of which are located in the second portion of the rollable display, and the openings of the buffer member are filled with an adhesive P.

An electronic device 200 (e.g., the electronic device 101 in FIG. 1) according to various embodiments disclosed herein may include: a first housing 210; a second housing 220 slidably coupled to the first housing; a rollable display 230 having a display area that is contracted or expanded based on sliding of the second housing; a support member 240 including multiple bars 240-1 including a bendable structure, configured to move by the sliding of the second housing, and configured to support at least a portion of the rollable display; and a processor (e.g., the processor 120 in FIG. 1) electrically connected to the rollable display, wherein the processor is configured to control the rollable display such that a visual user interface (UI) 520 is displayed on an area 510 on the rollable display corresponding to an area in which the multiple bars of the support member are located.

In addition, the processor is configured to control the rollable display such that a central portion 521 of the UI is aligned with a central portion 511 of an area on the rollable display corresponding to a central portion M of the bars.

The embodiments disclosed in the specification and drawings are provided merely to easily describe the technical features according to the embodiments disclosed herein and to help understanding of the embodiments disclosed herein, and are not intended to limit the scope of the embodiments disclosed herein. Therefore, the scope of the various embodiments disclosed herein should be construed in such a manner that, in addition to the embodiments disclosed herein, all changes or modifications derived from the technical idea of the various embodiments disclosed herein are included in the scope of the various embodiments disclosed herein.

## Claims

1. An electronic device comprising:
a first housing;
a second housing slidably coupled to the first housing;
a rollable display comprising a first portion visible from an exterior of the electronic device, and a second portion extending from the first portion and configured to be at least partially fed into a first space of the electronic device or fed out of the first space, the rollable display having a display area that is contracted or expanded based on sliding of the second housing;
a first support plate disposed under the rollable display and adapted to support the rollable display, the first support plate comprising a plurality of first openings;
a second support plate disposed under the first support plate and adapted to support the first support plate; and
a support member comprising multiple bars comprising a bendable structure, configured to move through the sliding of the second housing, and disposed under the second support plate to support the rollable display.

2. The electronic device of claim 1, wherein the second support plate has a thickness smaller than a thickness of the first support plate.

3. The electronic device of claim 1, wherein the second support plate comprises a plurality of second openings.

4. The electronic device of claim 1, wherein the first support plate comprises a first pattern comprising a first area comprising the first openings and a second area other than the first area, at least a portion of the first pattern being located in the second portion of the rollable display.

5. The electronic device of claim 4, wherein the second support plate comprises a second pattern comprising a third area comprising the second openings and corresponding to the second area and a fourth area corresponding to the first area, at least a portion of the second pattern being located in the second portion of the rollable display.

6. The electronic device of claim 5, wherein at least some of the bars of the support member are located in a fourth area of the second support plate to support the rollable display.

7. The electronic device of claim 4, wherein the first support plate comprises (1-1)^{th} openings provided in the second area, and
wherein a number of (1-1)^{th} openings provided in the second area is smaller than a number of first openings provided in the first area of the first support plate.

8. The electronic device of claim 7, wherein the (1-1)^{th} openings have a width smaller than an interval of the multiple bars of the support member.

9. The electronic device of claim 7, wherein the second support plate comprises a second pattern comprising a third area comprising the second openings and corresponding to the second area and a fourth area corresponding to the first area, at least a portion of the second pattern being located in the second portion of the rollable display, wherein the (1-1)^{th} openings of the first support plate do not overlap the second openings provided in the third area of the second support plate when the first support plate is viewed perpendicularly.

10. The electronic device of claim1, further comprising a buffer member disposed between the first support plate and the second support plate, and made of an elastic material.

11. The electronic device of claim 10, wherein the buffer member comprises a plurality of third openings, at least some of which are located in the second portion of the rollable display, and
wherein the third openings are filled with an adhesive.

12. The electronic device of claim 1, further comprising a heat dissipation member disposed between the first support plate and the second support plate and made of a thermally conductive material.

13. The electronic device of claim1, wherein the first support plate and the second support plate are made of different materials.

14. An electronic device comprising:
a first housing;
a second housing slidably coupled to the first housing;
a rollable display having a display area that is contracted or expanded based on sliding of the second housing;
a support member comprising multiple bars comprising a bendable structure, configured to move by the sliding of the second housing, and configured to support at least a portion of the rollable display; and
a processor electrically connected to the rollable display,
wherein the processor is configured to control the rollable display such that a visual user interface(UI) is displayed on an area on the rollable display corresponding to an area in which the multiple bars of the support member are located.

15. The electronic device of claim 14, wherein the processor is configured to control the rollable display such that a central portion of the UI is aligned with a central portion of an area on the rollable display corresponding to the central portion of the bars.
